(19) Europäisches Patentamt
European Patent Office
Office européen des brevets

(11) **EP 3 138 649 B1**

(12) **EUROPÄISCHE PATENTSCHRIFT**

(45) Veröffentlichungstag und Bekanntmachung des Hinweises auf die Patenterteilung:
**21.11.2018 Patentblatt 2018/47**

(51) Int Cl.:
***B23K 9/10*** *(2006.01)*          ***B23K 11/24*** *(2006.01)*
***B23K 11/26*** *(2006.01)*

(21) Anmeldenummer: **16164877.9**

(22) Anmeldetag: **12.04.2016**

(54) **VORRICHTUNG UND VERFAHREN ZUM KONDENSATORENTLADESCHWEISSEN**

DEVICE AND METHOD FOR CAPACITOR DISCHARGE WELDING

DISPOSITIF ET PROCEDE DE SOUDAGE PAR DECHARGE DE CONDENSATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.09.2015 DE 102015114578**

(43) Veröffentlichungstag der Anmeldung:
**08.03.2017 Patentblatt 2017/10**

(73) Patentinhaber: **Harms & Wende GmbH & Co. KG 21079 Hamburg (DE)**

(72) Erfinder:
• **RUSCH, Hans-Jürgen 28876 Oyten (DE)**
• **SCHUSTER, Frank 41469 Neuss (DE)**

(74) Vertreter: **Eisenführ Speiser Patentanwälte Rechtsanwälte PartGmbB Postfach 10 60 78 28060 Bremen (DE)**

(56) Entgegenhaltungen:
**EP-A1- 0 225 443     EP-A2- 1 990 123
DE-A1- 2 713 045     SU-A1- 448 101
US-A- 5 986 907**

**Beschreibung**

Die vorliegende Erfindung betrifft eine Schweißvorrichtung zum Durchführen eines Kondensatorentladeschweißverfahrens und die vorliegende Erfindung betrifft ein Verfahren zum Durchführen eines Kondensatorentladeschweißverfahrens.

Das Kondensatorentladungsschweißen, das verkürzt als KE-Schweißen bezeichnet wird, ist ein Widerstandsschweißverfahren, das mit hohen Strömen, die oftmals 100 kA und mehr betragen können, in kurzer Zeit, bspw. im Bereich um 10 ms, punktförmige Schweißverbindungen erzeugt. Unter hohen Anpresskräften, die 10 kN und deutlich mehr betragen können, drücken Elektroden die Fügeteile zusammen. Durch das Zünden eines Thyristors wird die Ladung eines Kondensators, der grundsätzlich als Kondensatorenbank ausgeführt ist, über die Elektroden durch die Fügeteile geleitet. Es kann auch ein Transformator zwischengeschaltet sein. Der Schweißstrom erwärmt diese Fügeteile partiell bis in die Nähe des Schmelzpunktes, so dass die Teile nach dem Erkalten verschweißt sind.

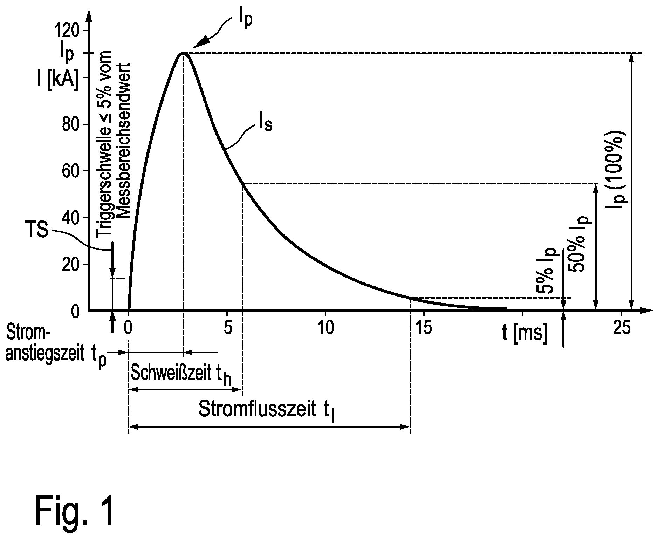

Figur 1 zeigt dazu einen typischen Verlauf des Schweißstroms und die zugehörigen Parameter.

Aufgrund der Konstruktion von KE-Maschinen, wegen der hohen Ströme werden nicht abschaltbare Leistungshalbleiter, wie zum Beispiel Thyristoren eingesetzt, und so kann der Schweißstrom nicht abgeschaltet werden, sodass die Kurve bei jedem Schweißvorgang immer vollständig durchlaufen wird, obwohl der eigentliche Schweißvorgang bereits beim Abklingen des Stroms auf 50 % des Spitzenstroms, das kann als 0,5 IP bezeichnet werden, beendet ist.

Die Merkmale des KE-Schweißens prädestinieren es für spezielle Einsatzfälle, zu denen die Folgenden gehören:

- Die kurze Schweißzeit begrenzt die Wärmeausbreitung innerhalb der Fügeteile, was einen hohen Wirkungsgrad ergibt und die thermische Belastung der Fügeteile minimiert. Es treten kaum Anlassfarben auf und der Verzug wird weitestgehend vermieden.

- Hohe Energiedichten, die in kurzer Zeit umgesetzt werden, erlauben das Verschweißen von größeren, meist rotationssymmetrischen Teilen mit Ringbuckeln bis ca. 200 mm Durchmesser.

- Der extrem kurze Prozess macht es möglich, Stähle mit erhöhtem Kohlenstoffgehalt, der typischerweise bis ca. 0,6 % reichen kann, und unterschiedliche Metalle, wie z. B. Stahl und Messing, zu verschweißen.

Nachteilig bei solchen KE-Prozessen ist, dass der Stromfluss weder durch ein Stellglied verändert noch abgeschaltet werden kann, und somit folgt die Erwärmung der Fügepartner stets dem typischen Kurvenverlauf. Dabei folgt einer extrem schnellen Erwärmung auf die Spitzentemperatur eine sehr kurze Verweildauer bei Temperaturen um den Schmelzpunkt, der sich die natürliche Abkühlung anschließt. Schweißprozesse mit längeren Stromflusszeiten von über 20 ms sind hierbei praktisch nicht möglich. Ebenso sind keine mehrpulsigen Schweißungen möglich.

Der eigentliche Fügeprozess endet mit dem Absinken des Stroms auf 50 % seines Spitzenwertes. Ein neuer Puls kann aber erst folgen, wenn der Strom vollständig abgeklungen ist, also den Haltestrom des Thyristors unterschritten hat, und die Freiwerdezeit verstrichen ist.

Bereits zu diesem Zeitpunkt ist die Schweißstelle so weit erkaltet, dass der Fügeprozess nicht fortgesetzt werden kann, selbst wenn der Kondensator bereits wieder geladen wäre.

Um die Fügezone neuerlich aufzuschmelzen, um die Verbindung zu verstärken, wäre ein deutlich höherer Energieeintrag notwendig als beim ersten Puls, da dieser erste Puls den Gesamtwiderstand der Fügezone deutlich abgesenkt hat.

Dennoch gibt es KE-Schweißungen mit zwei hintereinander folgenden Pulsen, bei denen der zweite Puls übergroße Aufhärtungen in der Fügestelle reduziert. Dieses gelingt aber nur im eingeschränkten Maße, da ein Anlassprozess eigentlich eine längere Erwärmung auf mittlere Temperaturen notwendig macht, der KE-Puls aber kurz und energiereich ist.

Das Dokument DE 2713045 A1 betrifft eine Speisequelle für Schweißanlagen, die parallel zueinander geschaltete Ladekreise mit Speicherkondensatoren und Trenndioden aufweist.

Das Dokument US 5986907 A betrifft ein Verfahren und eine Vorrichtung zum Gleichrichten, Wechselrichten und Steuern eines Leistungsflusses. Dort werden mehrere Energiespeicherelemente nacheinander entladen.

Das Dokument EP 1990123 A2, welches als nächstliegender Stand der Technik angesehen wird, betrifft ein Punktschweißverfahren von metallischen Bauteilen. Dabei wird der Schweißstrom durch Kondensatorentladung als Stromimpuls mit einer Impulsdauer von deutlich über 10 Millisekunden erzeugt.

Das Dokument EP 0225443 A1 betrifft ein Punktschweißgerät für die Dentaltechnik. Dort ist an eine Niederspannungsgleichrichterschaltung eine Konsatoranordnung angeschlossen, die einen Strom für einen Lichtbogen liefert.

Das Dokument SU 448101 A1 betrifft ein Schweißverfahren, bei dem unterschiedlich viele Batterien über Schalter zusammengeschaltet werden können, um daraus gleichzeitig eine Entladung zu einem Schweißtransformator zu schaffen.

Der vorliegenden Erfindung liegt somit die Aufgabe zugrunde, zumindest eines der oben genannten Probleme zu adressieren. Insbesondere soll ein Kondensatorentladeschweißen verbessert werden. Wünschenswerte Verbesserungen sind:

1. Zweipulsige Fügeprozesse zu ermöglichen, bei denen die Schweißung über zwei Pulse hinweg ununterbrochen fortgesetzt wird. Die Pulse sind also so dicht hintereinander zu geben, dass dazwischen der Schweißvorgang nicht unterbrochen wird, beispielsweise keine Abkühlung stattfindet.

2. Den Schweißstrom zu einer frei wählbaren Zeit abzuschalten, bevor die Kondensatorenbank ihre gesamte Energie abgegeben hat. Es wäre also wünschenswert, den Schweißstrom abzuschalten, bevor er von allein abgeebbt ist. Damit könnte ein Kondensatorschweißen mit einer Wegabschaltung ermöglicht werden. Außerdem oder alternativ kann dadurch auch der Energieverbrauch gesenkt werden.

3. Wünschenswert wäre auch, verlängerte Nachimpulse zu schaffen, um wirkungsvoll Aufhärtungen in der Fügezone zu reduzieren.

Weitere wünschenswerte Verbesserungen sind:

4. Verbesserung des Teillastbetriebes, der eine kontinuierliche Veränderung der Arbeitspunkte sowie eine Veränderung der Prozesszeiten zulässt. Insbesondere sollten Umklemmarbeiten an der KE-Anlage vermieden werden.

5. Die Schweißenergie soll vergrößert werden können, ohne den Spitzenstrom zu erhöhen.

6. Ermöglichen von mehrpulsigen Fügeprozessen, bei denen die Schweißung über mehrere Pulse hinweg ununterbrochen fortgesetzt wird.

7. Arbeiten mit Vorpulsen, die über eine Widerstandsmessung die Schweißbedingungen überwacht bzw. dokumentiert und der zur Konditionierung der Fügestelle eingesetzt werden kann.

Zumindest soll zu bisher Bekanntem eine Alternative vorgeschlagen werden.

Erfindungsgemäß wird eine Schweißvorrichtung gemäß Anspruch 1 vorgeschlagen. Demnach ist die Schweißvorrichtung zum Durchführen eines Kondensatorentladungsschweißverfahrens vorgesehen, bei dem ein Schweißstrom durch Entladung wenigstens eines Kondensators erzeugt wird. Diese Schweißvorrichtung weist wenigstens eine erste Stromquelle zum Erzeugen eines ersten Kondensatorstroms auf, der wiederum zum Erzeugen des Schweißstroms verwendet wird. Der Kondensatorstrom könnte der Schweißstrom sein, üblicherweise wird der Kondensatorstrom aber über einen Transformator transformiert, so dass der Transformator schließlich den Schweißstrom abgibt.

Eine solche Stromquelle umfasst einen ersten Kondensator zum Bereitstellen elektrischer Energie und einen ersten Thyristor zum Einschalten des ersten Kondensatorstroms aus dem ersten Kondensator. Wird also der Thyristor gezündet, leitet er das Entladen des Kondensators ein und es entsteht der Kondensatorstrom.

Außerdem ist eine zweite Stromquelle vorgesehen, die ebenfalls einen Kondensatorstrom, nämlich einen zweiten Kondensatorstrom erzeugt. Diese zweite Stromquelle erzeugt wechselseitig mit der ersten Stromquelle den Schweißstrom oder einen Teil davon. Besonders kann die zweite Stromquelle wenigstens dem Prinzip nach wie die erste Stromquelle aufgebaut sein. Dabei ist zu beachten, dass der erste als auch der zweite Kondensator, und Gleiches gilt für noch weitere Kondensatoren, regelmäßig als Kondensatorenbänke ausgeführt sind. Insoweit das für das vorliegende Verfahren bzw. die vorliegende Schweißvorrichtung von Relevanz ist, stellen solche Kondensatorenbänke elektrotechnisch aber einen Kondensator dar. Auf die konkrete Verschaltung innerhalb solcher Kondensatorenbänke kommt es bei der vorliegenden Erfindung nicht an.

Wenigstens die erste Stromquelle, vorzugsweise aber weitere oder alle Stromquellen dieser Schweißvorrichtung, weisen jeweils einen Thyristor zum Einschalten des Kondensatorstroms auf. Hierbei geht es um ein Bauteil, das über einen Zündimpuls gezündet, aber nicht, jedenfalls nicht darüber, gelöscht werden kann. Dieses Kriterium dürfte derzeit nur ein Thyristor erfüllen. Sollte gleichwohl ein anderes Bauteil vorhanden sein oder in Zukunft noch entwickelt werden, das diese Eigenschaft erfüllt, ohne ein Thyristor zu sein, so könnte auch das für die vorliegende Erfindung geeignet sein und fällt auch unter die beanspruchte Lehre.

Es wird somit vorgeschlagen, dass die erste und zweite Stromquelle wechselseitig jeweils einen Kondensatorstrom erzeugen und über diesen dann der Schweißstrom erzeugt wird. Dieses wechselseitige Erzeugen kann auch beinhalten, dass nur jede Stromquelle einen Strompuls pro Schweißvorgang erzeugt.

Alternativ können aber auch mehr als zwei Stromquellen vorgesehen sein und nach und nach Strompulse erzeugen, also beispielsweise umlaufend, so dass erst die erste Stromquelle, dann die zweite Stromquelle, dann die dritte Stromquelle usw. einen Strompuls erzeugt und ggf. bei der ersten Stromquelle wieder begonnen wird. Zwischenzeitlich können jeweils die Kondensatoren der gerade nicht verwendeten Stromquelle zumindest teilweise wieder aufgeladen werden.

Durch die Verwendung mehrerer, wenigstens zweier Stromquellen können somit mehrere Strompulse auch in enger Zeitfolge erzeugt werden, was durch eine einzige Stromquelle bisher nicht möglich war.

Vorzugsweise ist die zweite Stromquelle, zumindest der Art nach, wie die erste Stromquelle aufgebaut und weist entsprechend einen zweiten Kondensator zum Bereitstellen elektrischer Energie auf sowie einen zweiten Thyristor zum Einschalten des zweiten Kondensatorstroms aus dem zweiten Kondensator. Die Stromquellen können dabei gleich oder unterschiedlich dimensioniert sein. Dabei werden diese beiden Stromquellen so verschaltet, dass das Einschalten des zweiten Kondensatorstroms ein Ausschalten des ersten Kondensatorstroms bewirken kann bzw. dass das Einschalten des ersten Kondensatorstroms ein Ausschalten des zweiten Kondensatorstroms bewirken kann. Demnach werden also nicht einfach zwei Stromquellen vorgesehen, die unabhängig voneinander jeweils einen gewünschten Strompuls erzeugen können, sondern diese interagieren in geschickter Art und Weise miteinander.

Vorzugsweise ist die Schweißvorrichtung so ausgestaltet, dass das Einschalten des ersten Kondensatorstroms durch Zünden des ersten Thyristors erfolgt und dadurch der zweite Thyristor gelöscht werden kann, um dadurch den zweiten Kondensatorstrom auszuschalten. Entsprechend kann das Einschalten des zweiten Kondensatorstroms durch Zünden des zweiten Thyristors dadurch den ersten Thyristor löschen, um dadurch den ersten Kondensatorstrom auszuschalten.

Diese beiden Stromquellen - dieses Prinzip kann auch durch nacheinander Schalten von mehr als zwei Stromquellen sinngemäß verwirklicht werden - interagieren also auf geschickte Art und Weise miteinander, indem nicht nur die jeweils andere Stromquelle zu einem gewünschten Zeitpunkt einen Strompuls erzeugen kann, sondern indem unmittelbar dadurch auch der Thyristor der anderen Stromquelle, der gerade aktiv ist, gelöscht wird und es dadurch gelingt, den Kondensatorstrom der anderen Stromquelle abzuschalten.

Vorzugsweise ist die Schweißvorrichtung und entsprechend die Stromquellen so aufgebaut, dass der erste Kondensator mit dem ersten Thyristor in Reihe geschaltet und an einen Überlagerungsknoten angeschlossen ist, so dass der erste Kondensatorstrom von diesem ersten Kondensator durch diesen ersten Thyristor zum Überlagerungsknoten fließt. In gleicher Art und Weise ist auch der zweite Stromkreis aufgebaut, nämlich dass der zweite Kondensator mit dem zweiten Thyristor in Reihe geschaltet und an denselben Überlagerungsknoten angeschlossen ist, wie die erste Stromquelle. Die zweite Stromquelle ist somit auch so an den Überlagerungsknoten angeschlossen, dass der zweite Kondensatorstrom von dem zweiten Kondensator durch den zweiten Thyristor zum Überlagerungsknoten fließt. Somit kann auf sehr einfache Art und Weise diese Schweißvorrichtung zum Erzeugen des Schweißstroms vorgesehen sein, indem diese wenigstens zwei Stromquellen über diesen gemeinsamen Überlagerungsknoten zusammengeschaltet sind.

Vorzugsweise ist die Schweißvorrichtung hierbei so ausgebildet, dass durch das Zünden des ersten Thyristors das elektrische Spannungspotential am Überlagerungsknoten so angehoben wird, dass der zweite Thyristor dadurch erlischt, wenn er zuvor gezündet war. Entsprechend kann auch das Zünden des zweiten Thyristors, das natürlich nicht zugleich mit dem Zünden des ersten Thyristors erfolgt, das elektrische Spannungspotential am Überlagerungsknoten so anheben, dass der erste Thyristor dadurch erlischt, wenn er zuvor gezündet war.

Entsprechend kann das Zusammenspiel dieser beiden Stromquellen - sinngemäß können auch weitere Stromquellen verbunden werden - auf einfache Art und Weise realisiert werden, indem die physikalischen bzw. technischen Eigenschaften gezielt eingesetzt werden.

Besonders erfolgt dieses wechselseitige Zünden und Löschen so, dass am Anfang, wenn der Schweißvorgang beginnt und die erste Zündung, insbesondere des ersten Thyristors erfolgt, dieser den ersten Kondensatorstrom einschaltet. Der erste Kondensator liefert dann diesen Kondensatorstrom und wird dadurch auch nach und nach entladen. Damit sinkt auch seine Spannung. Wird nun der nächste, insbesondere zweite Thyristor gezündet, wird dadurch das Spannungspotential des Überlagerungsknotens etwa von der Spannung des ersten Kondensators, abzüglich der Spannung über den ersten Thyristor, auf das Niveau des in dem Moment noch vollgeladenen zweiten Kondensators, abzüglich der Spannung über den zweiten Thyristor, angehoben. Als Resultat fällt dann eine negative Spannung über dem ersten Thyristor an, wodurch der fließende Strom auf den zweiten Thyristor kommutiert. Der Strom durch den ersten Thyristor wird null, fällt also unter den Haltestrom und der erste Thyristor wird gelöscht. Gleichzeitig fließt der zweite Kondensatorstrom, der damit den ersten Kondensatorstrom, abgelöst hat.

Dieser Vorgang kann bei Bedarf wechselseitig wiederholt werden, auch dann, wenn die jeweiligen Kondensatoren zwischenzeitlich nicht wieder vollständig aufgeladen werden konnten.

Gemäß einer Ausgestaltung ist ein Transformator mit Primärseite und Sekundärseite vorgesehen und jede Stromquelle ist mit der Primärseite des Transformators so verschaltet, dass der erzeugte Kondensatorstrom durch die Primärseite fließt und dadurch in der Sekundärseite den Schweißstrom erzeugt. Es sind also mehrere Stromquellen aber nur ein Transformator vorgesehen. Besonders kann das Anschließen der Primärseite des Transformators so erfolgen, dass jedenfalls ein Anschlusspunkt der Primärseite an den Überlagerungsknoten angeschlossen wird. Alle Kondensatorströme fließen über diesen Kondensatorknoten, allerdings nacheinander und können dadurch in die Primärseite bzw. zur Primärseite des Transformators fließen. Es ist somit auch mit Verwendung dieses Transformators eine sehr einfache Schaltung möglich, die die genannte Funktionalität erreichen kann.

Gemäß einer Ausführungsform wird vorgeschlagen, dass wenigstens eine dritte Stromquelle vorgesehen ist, um nach und nach mit der ersten und zweiten Stromquelle und ggf. mit noch weiteren Stromquellen den Schweißstrom oder einen Teil davon zu erzeugen. Hierbei können diese Stromquellen die gleiche Dimensionierung aufweisen, oder sie können eine unterschiedliche Dimensionierung aufweisen. Gemäß einer Alternative können auch zwei Stromquellen gleich dimensioniert sein und eine weitere Stromquelle anders, z.B. deutlich kleiner dimensioniert sein. Das kann auch von dem Anwendungsfall abhängen, wie nachfolgend noch erläutert werden wird.

Eine weitere Ausführungsform schlägt vor, dass der erste Kondensator eine wenigstens doppelt so große Kapazität aufweist wie der zweite Kondensator, insbesondere wenigstens eine fünfmal, vorzugsweise wenigstens eine zehnmal so große Kapazität wie der zweite Kondensator. Der erste Kondensator ist somit signifikant größer als der zweite Kondensator. Durch solche signifikant unterschiedliche Kondensatoren können diese unterschiedliche Aufgaben erfüllen. Der kleinere Kondensator kann bspw. zum Erzeugen eines Vorimpulses verwendet werden, um damit eine Widerstandsmessung vor dem Schweißprozess durchführen zu können. Durch den kleineren zweiten Kondensator kann ein sehr kleiner Stromimpuls erzeugt werden, der ausreicht, den Thyristor des ersten Kondensators zu löschen, um einen Schweißstrom des ersten Kondensator zu beenden, ohne dass dafür von dem zweiten Kondensator ein nennenswerter Schweißstrom ausgehen muss.

Vorzugsweise ist wenigstens eine dritte, vierte oder noch weitere Stromquelle vorgesehen und jede Stromquelle ist strukturell wie die erste Stromquelle aufgebaut und an den gemeinsamen Überlagerungsknoten angeschlossen. Jede Stromquelle weist somit einen Kondensator zum Bereitstellen elektrischer Energie und einen Thyristor zum Einschalten eines Kondensatorstroms aus dem Kondensator auf. Trotz gleicher Struktur können die Stromquellen aber unterschiedlich dimensioniert sein, besonders unterschiedliche Kondensatoren aufweisen. Dennoch können die Stromquellen, nämlich besonders ihre Thyristoren, auf gleiche Art und Weise angesteuert werden. Durch die Auswahl, Reihenfolge und die Zeitpunkte der Ansteuerung, kann in einer großen Variationsbreite Einfluss auf den durchzuführenden Schweißprozess genommen werden.

Nach einer noch weiteren Ausgestaltung wird vorgeschlagen, dass jeweils zwei Stromquellen zusammen eine Doppelstromquelle bilden und die beiden Stromquellen einer Doppelstromquelle unterschiedlich große Kondensatoren aufweisen, wobei vorzugsweise zwei Doppelstromquellen vorgesehen sind. Durch die unterschiedlich großen Kondensatoren, insbesondere wenn sie signifikant unterschiedlich groß sind, kann jede Doppelstromquelle die unterschiedlich großen Kondensatoren zur gezielten Steuerung unterschiedlicher Schweißstromverläufe einsetzen. Durch Verwendung mehrerer, besonders zweier Doppelstromquellen ergeben sich bei vergleichsweise geringem Aufwand viele Möglichkeiten einer Schweißstromsteuerung. Dabei können die so kombinierten Doppelstromquellen aber individuell angesteuert werden. Bspw. können auch Schweißvorgänge realisiert werden, bei denen trotz Verwendung zweier Doppelstromquellen, also insgesamt vier Stromquellen, nur drei dieser vier Stromquellen angesteuert werden. Auch bei der Verwendung zweier gleicher Doppelstromquellen können diese unterschiedlich angesteuert werden.

Vorzugsweise wird eine Schweißvorrichtung vorgeschlagen, die dadurch gekennzeichnet ist, dass sie eine Lade-Entlade-Schaltung zum Steuern der Stromquellen aufweist, wobei die Lade-Entlade-Schaltung dazu vorbereitet ist, die Kondensatoren jeder Stromquelle unabhängig voneinander auf unterschiedliche Spannungen aufzuladen und/oder auf unterschiedliche Spannungen zu entladen. Dadurch können vor einem Schweißprozess die Kondensatoren auch auf unterschiedliche Spannungen gebracht werden und damit sind entsprechend vielfältige Schweißprozesse realisierbar.

Gemäß einer Ausführungsform umfasst die Lade-Entlade-Schaltung folgendes:

- für jede Stromquelle wenigstens ein Ladeelement zum Laden des Kondensators der Stromquelle,

- für jede Stromquelle wenigstens ein Entladeelement zum Entladen des Kondensators der Stromquelle, und

- eine Steuereinheit zum Steuern der Lade- und Entladeelemente,

wobei die Steuereinheit dazu eingerichtet ist,

- die Lade- und Entladeelemente separat so anzusteuern, dass der Ladezustand der Kondensatoren der Stromquellen zueinander unabhängig eingestellt wird, und

- die Thyristoren der Stromquellen individuell, insbesondere sequentiell zu zünden.

Das Laden bzw. das Entladen der Kondensatoren der Stromquellen wird somit über eine Steuereinheit gesteuert, nämlich besonders über eine gemeinsame Steuereinheit für alle Stromquellen. Die Steuereinheit ist dabei mit den Kondensatoren über Lade- bzw. Entladeelemente verbunden, dies können beispielsweise IGBTs sein. Zudem weist jede Stromquelle wenigstens ein Ladeelement auf, das den Kondensator der Stromquelle aufladen kann und wenigstens ein Entladeelement, das den Kondensator der Stromquelle entladen kann. Jede Stromquelle ist somit als separater Strang ausgeführt und kann individuell durch die gemeinsame Steuereinheit angesteuert werden.

Besonders vorteilhaft hierbei ist, dass die Steuereinheit sowohl die Kondensatoren unabhängig voneinander laden und entladen als auch die Thyristoren der Stromquellen unabhängig voneinander zünden kann.

Zudem erfolgt das Zünden der Thyristoren über die Steuereinheit in programmierten Sequenzen, sodass die einzelnen Ströme der Thyristoren zu einem Summenstrom überlagert werden, der innerhalb technischer Grenzen eine beliebige Form annehmen kann. Das sequenzielle Zünden kann aber auch beinhalten, dass bspw. zu einem Zeitpunkt auch zwei, oder sogar mehr Thyristoren zugleich gezündet werden. Die Lösung schafft insoweit eine große Vielfalt an Möglichkeiten.

Vorzugsweise ist die Schweißvorrichtung dadurch gekennzeichnet, dass sie

- mehrere, insbesondere vier Stromquellen aufweist, und

- eine gemeinsame Gleichrichterschaltung mit einem Gleichspannungsausgang zum Bereitstellen einer gemeinsamen Ladespannung, wobei

- an dem Gleichspannungsausgang ein RC-Glied angeschlossen ist, um die gemeinsame Ladespannung zu beeinflussen, und

- der Gleichspannungsausgang mit den Ladeelementen verbunden ist, um die gemeinsame Ladespannung an den Ladeelementen bereitzustellen, wobei

- jedes Ladeelement dazu eingerichtet ist, aus der gemeinsamen Ladespannung den Kondensator der jeweiligen Stromquelle individuell zu laden.

Es wurde erkannt, dass die Ausführung der Schweißvorrichtung mit vier Stromquellen besonders vorteilhaft ist, insbesondere für das KE-Schweißen. Durch vier Stromquellen können nahezu alle wichtigen Stromformen zum Schweißen moduliert werden, während zugleich die Anzahl der Stromquellen gering ist. Zum KE-Schweißen erweist sich eine Anzahl von vier Stromquellen daher als besonders vorteilhaft. Dennoch kann auch eine andere Anzahl vorgesehen sein, besonders 2, 6 oder 8 Stromquellen, um nur drei weitere bevorzugte Beispiele zu nennen.

Der Aufbau besonders der Lade-Entlade-Schaltung sieht somit eine Struktur vor, bei der eine Gleichrichterschaltung, die auch als Gleichrichter bezeichnet werden kann, eine gemeinsame Gleichspannung als Ladespannung für alle Ladeelemente und damit als Ladespannung für alle Stromquellen vorsieht. An dem Ausgang der Gleichrichterschaltung ist ein RC-Glied vorgesehen, das die Ladespannung, die am Ausgang der Gleichrichterschaltung und damit am RC-Glied anliegt, beeinflussen kann. Besonders beim Einschalten der Gleichrichterschaltung kann das RC-Glied zu einem definiertem Anstieg der Ladespannung führen. Die RC-Schaltung dient besonders dazu, den Prozess des Einschaltens geordnet ablaufen zu lassen und insbesondere dem Laderegler definierte Strom- und Spannungsmesswerte zu liefern, damit die Reglung ordentlich funktioniert.

Die Schweißvorrichtung weist somit, bei vier Stromquellen, vier Stränge auf, einen für jede Stromquelle, die über eine gemeinsame Versorgung aufgeladen werden. Beispielsweise kann zum Entladen ein Schütz vorgesehen sein, dass im Falle einer Notentladung auslöst.

Gemäß einer weiteren Ausführungsform ist Schweißvorrichtung, besonders die Lade-Entlade-Schaltung, dadurch gekennzeichnet, dass

- die Gleichrichterschaltung als passive Gleichrichterschaltung ausgebildet ist,

- die Gleichrichterschaltung an ihrem Gleichspannungsausgang die gemeinsame Ladespannung bereitstellt,

- an einem Wechselspannungseingang der Gleichrichterschaltung ein Ladetransformator angeschlossen ist, um die Gleichrichterschaltung mit einer Wechselschaltung zu versorgen und

- ein Laderegler zum Steuern des Ladetransformators vorgesehen ist, und dazu eingerichtet ist, durch das Steuern des Ladetransformators die gemeinsame Ladespannung zu steuern.

Es wird somit ein passiver Gleichrichter mit einer aktiven Steuerung des Ladetransformators kombiniert. Dadurch kann trotz Verwendung eines passiven Gleichrichters seine Ausgangsspannung gesteuert werden. Das beschriebene RC-Glied kann außerdem am Ausgang der Gleichrichterschaltung wirken.

Erfindungsgemäß wird auch ein Verfahren zum Durchführen eines Kondensatorentladungsschweißens vorgeschlagen, das eine Schweißvorrichtung gemäß wenigstens einer der vorstehend erläuterten Ausführungsformen verwendet. Entsprechend kann das Verfahren auch die Vorteile umsetzen, die im Zusammenhang mit den Ausführungsformen der Schweißvorrichtung beschrieben wurden.

Vorzugsweise arbeitet das Verfahren so, dass die wenigstens eine erste Stromquelle einen ersten Schweißstrompuls erzeugt und der Schweißstrom und außerdem oder alternativ die jeweiligen Kondensatorströme überwacht werden. Davon abhängig erzeugt dann die zweite Stromquelle einen zweiten Strompuls, besonders bevor der erste Strom-puls abgeklungen ist. Hierdurch kann gezielt ein Kondensatorentladungsschweißverfahren so gesteuert werden, dass beispielsweise zwei Strompulse dicht hintereinander folgen können. Der zweite Strompuls kann genau dann erfolgen, wenn der erste Strom-puls etwa einen Wert erreicht hat, bei dem für den jeweiligen Schweißvorgang ein zweiter Strompuls hilfreich oder wünschenswert wäre. Genau das kann durch dieses Verfahren erreicht werden.

Vorzugsweise werden sukzessive mehrere Schweißstrompulse abwechselnd durch die erste und zweite Stromquelle erzeugt. Sind mehr als zwei Stromquellen vorhanden, werden sukzessive mehrere Schweißstrompulse nach und nach durch die erste, zweite und wenigstens weitere dritte Stromquelle erzeugt. Dies kann besonders dann sinnvoll sein, wenn wenigstens ein dritter Strompuls in kurzem Abstand benötigt wird, den die erste Stromquelle noch nicht leisten kann, wenn es noch nicht möglich war, den ersten Kondensator wieder ausreichend aufzuladen.

Vorzugsweise wird vorgeschlagen, dass jeweils das Einschalten eines Kondensatorstroms, insbesondere das Zünden des betreffenden Thyristors, der dieses Einschalten auslöst, in Abhängigkeit der Spannungen an den Kondensatoren durchgeführt wird. Dadurch kann das Schalten, besonders das Zünden des jeweiligen Thyristors so gezielt überwacht und gesteuert werden, dass das Erlöschen des jeweils anderen Thyristors erreicht wird und auch gewährleistet werden kann, dass der so gelöschte Thyristor nicht versehentlich wieder zündet. Besonders zum Verhindern des ungewollten Wiederzündens überwacht die Steuerung, dass eine entsprechende Spannungsdifferenz vorliegt und an dem entsprechenden Thyristor, der in dem Moment nicht wieder zünden soll, eine ausreichend negative Spannung anliegt, die das Zünden ausschließen kann. Vorzugsweise wird somit vorgeschlagen, hierfür besonders die Spannungsdifferenz zwischen der ersten Kondensatorspannung, nämlich an dem ersten Kondensator und der zweiten Kondensatorspannung, nämlich an dem zweiten Kondensator bei dieser Steuerung zu berücksichtigen.

Sollen zwei oder mehrere Kondensatoren gleichzeitig gezündet werden, wird die Spannungsüberwachung ebenfalls benötigt. Sie kann erreichen, dass der eine oder die mehreren leitenden Thyristoren mit keiner zu großen negativen Spannung beaufschlagt werden und somit nicht gelöscht werden.

Gemäß einer Ausführungsform wird vorgeschlagen, dass das Zünden eines Thyristors zum Einschalten eines Kondensatorstroms jeweils nach einer vorbestimmten Zündverzögerung erfolgt, und dass insbesondere für jedes Zünden eine individuelle Zündverzögerung vorgegeben wird. Damit lassen sich praktisch beliebige Werte von Spitzenströmen und Schweißzeiten unterhalb einer Maximalentladekurve im Grunde stufenlos einstellen. Das Variieren von Schweißparametern kann über das Verändern der Zündverzögerung zwischen dem Zünden bspw. eines Thyristors eines Hilfskondensators bezogen auf das zuvor durchgeführte Zünden eines Thyristors eines Hauptkondensators gesteuert werden.

Die Zündverzögerungen können sich auf einen Referenzzeitpunkt beziehen, bspw. auf den Zeitpunkt, zu dem bei einem Schweißvorgang er erste Thyristor zum Einschalten eines ersten Kondensatorstroms gezündet wird. Vorzugsweise ist das das Zünden des Thyristors des ersten Hauptkondensators.

Gemäß einer weiteren Ausgestaltung wird vorgeschlagen, dass

- mehrere Thyristoren jeweils zum Einschalten eines Kondensatorstroms vorgesehen sind und

- die Kondensatorströme sich zu einem Schweißstrom zusammensetzen und

- für jeden Thyristor eine oder mehrere individuelle Zündverzögerungen vorbestimmt sind, so dass

- der Schweißstrom für einen mehrere Zündverzögerungen umfassenden Zeitraum innerhalb eines vorbestimmten Strombereichs liegt, der durch eine unter Stromgrenze und eine obere Stromgrenze gekennzeichnet ist.

So können nach und nach Thyristoren gezündet werden und dadurch Kondensatorströme geschaltet werden. Aus den Kondensatorströmen, deren Form auch von einem involvierten Transformator abhängt, setzt sich der Schweißstrom zusammen, nämlich insbesondere zeitlich hintereinander. Durch die gezielte Wahl der jeweiligen Zündverzögerungen können diese Kondensatorströme, aus denen sich der Schweißstrom dann zusammensetzt in ihrem Verlauf beeinflusst werden, wodurch der Schweißstrom insgesamt beeinflusst werden kann. Besonders können dadurch Kondensatorströme jeweils unterbrochen und damit begrenzt werden, um die obere Stromgrenze nicht zu überschreiten.

Und es können neue Kondensatorströme andere ablösen, bevor diese die untere Stromgrenze unterschreiben. Es können auch Schweißzeitverkürzungen realisiert werden.

Es können grundsätzlich, gemäß dieser oder anderer Ausführungsformen, auch mehrere Kondensatoren, insbesondere Hauptkondensatoren gleichzeitig gezündet werden.

Die Erfindung wird nun nachfolgend anhand von Ausführungsbeispielen unter Bezugnahme auf die begleitenden Figuren beispielhaft näher erläutert.

| | |
|---|---|
| Figur 1 | zeigt einen typischen Verlauf eines Schweißstroms eines Kondensatorentladungsschweißens gemäß dem Stand der Technik. |
| Figur 2 | zeigt schematisch einen Schaltplan eines Teils einer Schweißvorrichtung gemäß der vorliegenden Erfindung mit zwei Stromquellen. |
| Figur 3 | zeigt einen möglichen Schweißstromverlauf bei symmetrischen Verhältnissen der Kondensatorenbänke einer Schweißvorrichtung gemäß Figur 2. |
| Figur 4 | zeigt einen möglichen Schweißstromverlauf ganz ähnlich zu dem Verlauf gemäß Figur 3, wobei hier der zweite Strompuls früher initiiert wird. |
| Figur 5 | zeigt einen Stromverlauf für eine andere Anwendung als den Figuren 3 und 4 zugrunde gelegen hat, bei der nämlich der zweite Kondensator über eine wesentlich geringere Kapazität als der erste verfügt. |
| Figur 6 | zeigt einen Stromverlauf ähnlich zu Figur 5, wobei der zweite Strompuls eher initiiert wird. |
| Figur 7 | zeigt einen Stromverlauf für eine weitere Anwendung, die das Nachwärmen zur Verringerung von Aufhärtungen betrifft. |
| Figur 8 | zeigt verschiedene Schweißstromverläufe gemäß dem Stand der Technik. |
| Figur 9 | zeigt schematisch einen Schaltplan eines Teils einer Schweißvorrichtung gemäß einer Ausführungsform der vorliegenden Erfindung mit vier Stromquellen. |
| Figur 10 | zeigt schematisch einen Schaltplan eines Teils einer Schweißvorrichtung gemäß einer weiteren Ausführungsform der vorliegenden Erfindung mit zwei Stromquellen. |
| Figur 11 | zeigt verschiedene Schweißstromverläufe im Vergleich. |
| Figur 12 | zeigt schematisch einen Schaltplan eines Teils einer Schweißvorrichtung gemäß einer weiteren Ausführungsform der vorliegenden Erfindung mit zwei Stromquellen. |
| Figuren 13 bis 18 | zeigen verschiedene Schweißstromverläufe für unterschiedliche Schweißstromvorrichtungen und/oder unterschiedliche Ansteuerungen. |
| Figuren 19a und 19b | zeigen einen Schaltplan einer Schweißvorrichtung gemäß einer Ausführungsform der Erfindung. |

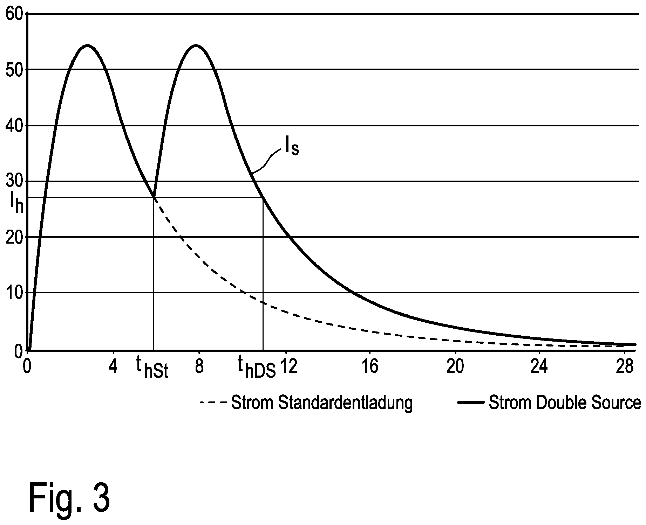

Figur 1 zeigt einen typischen Verlauf des Schweißstroms eines bekannten Kondensatorentladungsschweißvorgangs. Dort ist, wie auch in den Diagrammen der Figuren 3 bis 7, der Stromverlauf in Abhängigkeit der Zeit aufgetragen. Zunächst ist am Anfang des Vorgangs eine Triggerschwelle TS eingezeichnet, die den messtechnischen Beginn des Schweißvorgangs und die somit den Anfang der entsprechenden Prozesszeiten markiert. Nach dem Einschalten steigt der Strom stark an und als Stromanstiegszeit $t_p$ wird die Zeit angenommen, bis etwa ein Maximalwert des Stroms erreicht ist. Hier liegt die Stromanstiegszeit $t_p$ etwa bei 3 ms. Der Strom hat hierbei einen Wert von etwa 110 kA erreicht. Der Strom klingt dann ab, weil auch der Kondensator entladen wird. Bis der Strom auf etwa 50% des Spitzenstroms $I_p$ abgefallen ist, also 50% des Wertes, den der Strom in seiner Spitze nach der Stromanstiegszeit $t_p$ erreicht hat, dauert etwa der eigentliche Schweißvorgang an und entsprechend ist die Schweißzeit $t_h$ eingezeichnet. Sie beträgt hier etwa 6 ms.

Der Strom fließt nach Ende der eingezeichneten Schweißzeit $t_h$ mit weiter abnehmender Amplitude weiter, bis er etwa auf 5% des Spitzenstroms $I_p$ abgesunken ist, was hier etwa bei 14 ms der Fall ist. Bis zu diesem Zeitpunkt wird von der Stromflusszeit $t_l$ ausgegangen. Nach dem Ende der Stromflusszeit $t_l$, die lediglich als eine schweißtechnische Größe zu betrachten ist, fließt der Strom noch weiter, während er abklingt. Erst nachdem der Haltestrom des Thyristors, der häufig deutlich kleiner als 1 A ist, unterschritten wurde, sperrt der Thyristor. Der gesamte Schweißvorgang ist endgültig abgeschlossen, wenn die Freiwerdezeit des Thyristors, die üblicherweise unter 1 ms liegt, verstrichen ist und dieser sein Sperrvermögen wiedererlangt hat.

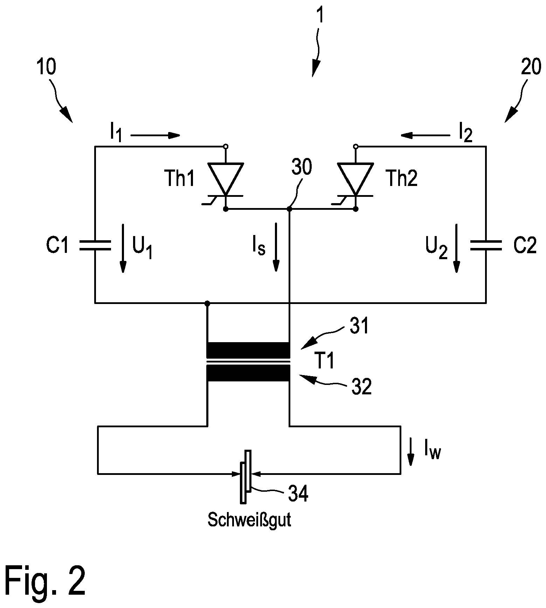

Figur 2 zeigt eine erfindungsgemäße Schweißvorrichtung 1 mit einer ersten Stromquelle 10 und einer zweiten Stromquelle 20. Die erste und zweite Stromquelle 10 bzw. 20 sind hier im Wesentlichen identisch aufgebaut. Die erste Stromquelle 10 umfasst dabei einen ersten Kondensator C1 und einen ersten Thyristor Th1. Der erste Kondensator C1 ist dabei mit dem ersten Thyristor Th1 in Reihe geschaltet und an den Überlagerungsknoten 30 angeschlossen und darüber an die Primärseite 31 des Transformators T1 angeschlossen.

Zum Erzeugen eines Strompulses mit der ersten Stromquelle 10 wird somit im aufgeladenen Zustand des ersten Kondensators C1 der erste Thyristor Th1 gezündet und es fließt dann ein erster Kondensatorstrom $I_1$ aus dem ersten Kondensator C1 durch den ersten Thyristor Th1 zum Überlagerungsknoten 30 und von dort fließt der Strom weiter in die bzw. zur Primärseite des Transformators T1. Es resultiert dann an der Sekundärseite 32 des Transformators T1 der tatsächliche Schweißstrom $I_w$, mit dem an dem Schweißgut 34 die gewünschte Schweißung vorgenommen werden soll.

Entsprechend ist die zweite Stromquelle 20 ganz ähnlich oder sogar identisch aufgebaut und weist einen zweiten Kondensator C2, der mit dem zweiten Thyristor Th2 in Reihe geschaltet ist und an den gemeinsamen Überlagerungsknoten 30 angeschlossen ist. Zum Erzeugen eines Stroms wird hier der zweite Thyristor Th2 gezündet und es fließt ein zweiter Kondensatorstrom $I_2$ von dem zweiten Kondensator C2 durch den zweiten Thyristor Th2 zum Überlagerungsknoten 30 und von dort weiter in die bzw. zur Primärseite 31 des Transformators T1.

Im Überlagerungsknoten 30 könnten sich der erste Kondensatorstrom $I_1$ mit dem zweiten Kondensatorstrom $I_2$ zu dem Summenstrom $I_S$ überlagern, sofern sie zur gleichen Zeit fließen würden.

Erfindungsgemäß ist es aber so, dass beim gezündeten ersten Thyristor Th1 die erste Spannung $U_1$ an dem ersten Kondensator C1 abgesunken ist. Wird nun der zweite Thyristor Th2 gezündet, fließt der zweite Kondensatorstrom $I_2$ und gleichzeitig wird das Potential des Überlagerungsknotens 30 auf den höheren Spannungswert $U_2$ des zweiten Kondensators C2 abzüglich der Spannung über den zweiten Thyristor Th2 angehoben, was zum Erlöschen des ersten Thyristors Th1 führt.

Die Schweißvorrichtung gemäß Figur 2 ist somit mit zwei Kondensatorenbänken C1 und C2 ausgerüstet, die auch als erster und zweiter Kondensator C1 bzw. C2 bezeichnet werden. Jede Kondensatorenbank, die somit Teil jeweils einer Stromquelle ist, verfügt über einen eigenen Schalt-Thyristor, nämlich Th1 bzw. Th2, die kathodenseitig zusammengeschaltet sind. Der Transformator T1, der als Impulstransformator ausgeführt sein kann, transformiert den sich ändernden Gleichstrom auf die Sekundärseite, wo der Schweißprozess abläuft.

Zu Beginn der Schweißung sind der erste und zweite Kondensator C1 und C2 auf gleich große oder unterschiedliche Spannungen $U_1$ und $U_2$ aufgeladen. Zuerst wird der erste Thyristor Th1 gezündet und es fließt der erste Kondensatorstrom $I_1 = I_S$. Die Spannung $U_1$ an dem ersten Kondensator sinkt. Zu einem Zeitpunkt tx, bei dem $U_2 > U_1$ ist, wird der zweite Thyristor Th2 gezündet. Über dem ersten Thyristor Th1 liegt dann eine negative Spannung $(U_1 - U_2)$ an, die diesen ersten Thyristor Th1 sperrt und den Strom auf den zweiten Thyristor Th2 kommutieren lässt $(I_2 = I_S)$ und dabei bleibt der zweite Thyristor Th2 leitend. Die Spannung $U_2$ sinkt nun und ihr Betrag muss noch so lange größer als $U_1$ bleiben, bis die Freiwerdezeit des ersten Thyristors Th1 verstrichen ist.

Unterschreitet danach, wenn die Freiwerdezeit verstrichen ist, der Betrag der weiter absinkenden Spannung $U_2$ den Momentanwert von $U_1$, könnte der erste Thyristor Th1 erneut gezündet und auf diese Weise der Prozess fortgesetzt werden, bis die Kondensatorenbänke C1 und C2 ihre gesamte Ladung abgegeben haben.

Das Kommutieren des Stroms zum zweiten bzw. ersten Thyristor ist ein sicheres Zeichen für das Sperren des ersten bzw. zweiten Thyristors und kann leicht detektiert werden. In dieser Phase wäre das Laden des Kondensators bzw. der Kondensatorenbank des gesperrten Thyristors möglich, um so den Gesamtprozess zu verlängern. Allerdings ist das eher eine theoretische Möglichkeit, da die jeweiligen Stromflusszeiten nur wenige Millisekunden betragen und in solch kurzer Zeit kaum nennenswerte Energiemengen in die Kondensatorenbank des gesperrten Thyristors geladen werden können.

Im Stromkreis der Thyristoren Th1 und Th2 befindet sich der genannte Transformator T1, der eine induktive Last darstellt. Als Impuls- und Schweißtransformator muss dieser Transformator T1 hohe Stromänderungsgeschwindigkeiten zulassen, weshalb er eher eine relativ kleine Induktivität besitzt. Dennoch muss diese bei der Dimensionierung der Thyristoren und beim Entwurf der Schaltung berücksichtigt werden, damit die Thyristoren den Spannungsanstieg während des Sperrens, nämlich in der Phase des Kommutierens, ertragen, und nicht neuerlich zünden oder gar zerstört werden. In gleicher Weise sind die zu erwartenden Negativspannungen, nämlich $U_1 - U_2$ bzw. $U_2 - U_1$, die die Kommutierung erzwingen, zu berücksichtigen. Ggf. sind Schutzschaltungen vorzusehen.

Neben den bereits diskutierten Einflüssen wirken sich ebenso die Kapazitäten der Kondensatorenbänke und die Ladespannungen, auf die diese aufgeladen sind, auf den Verlauf des Stromes $I_S$ aus. Dabei ist es keineswegs immer zwingend erforderlich, gleiche Werte für den ersten und zweiten Kondensator C1 bzw. C2 vorzusehen. Durch eine Kombination großer und kleiner Kapazität und/oder hoher und niedriger Ladespannung kann das Spektrum der Anwendungsfälle erweitert werden, wie unten noch ausgeführt wird.

Zum Umsetzen der erfindungsgemäßen Idee wird der Einsatz einer leistungsfähigen Steuerung vorgeschlagen, die die Spannungsverläufe $U_1$ und $U_2$ überwacht, um die Zündimpulse entsprechend des gewünschten Verlaufs des Summenstroms $I_S$ auszulösen. Über die Größe der Spannungsunterschiede, die die Steuerung zwischen dem gesperrten und den leitenden Stromkreis einstellt, wird der Verlauf des Summenstromes $I_S$ beeinflusst.

Zur weiteren Erläuterung der Erfindung werden nachfolgend einige Anwendungsbeispiele erläutert, die auch eine Umsetzung der Erfindung erleichtern. Die in den Diagrammen zumindest in den Figuren 3 bis 7 dargestellten Stromverläufe geben keine realen Verhältnisse wieder, sondern sie symbolisieren das Wirkungsprinzip. Dort ist jeweils auch der Stromverlauf gemäß dem Stand, wie in Figur 1 gezeigt, als gestrichelter Verlauf eingetragen, um jeweils die Verbesserung deutlich zu machen. Besitzen zwei Pulse die gleiche Amplitude, stammen sie abwechselnd aus dem ersten und zweiten Kondensator C1 und C2, bzw. aus den Kondensatorenbänken C1 und C2, die auf gleiche Ladespannungen aufgeladen waren. In der Realität würde der zweite Strom $I_2 = I_S$ einen höheren Spitzenwert erreichen als der unmittelbar vorausgegangene erste Strom $I_1 = I_S$.

In der Ausführungsform gemäß Figur 3 wird von symmetrischen Verhältnissen des ersten und zweiten Kondensators, also der Kondensatorenbänke C1 und C2 ausgegangen. Beide verfügen über identische Kapazitäten und sind auf gleiche Ladespannungen aufgeladen.

Wie der Stromfluss $I_S$ in der Figur 3 zeigt, ist die Steuerung so eingestellt, dass genau bei Erreichen des Stromwertes $I_h$ die Kommutierung durchgeführt wird und sich der zweite Puls anschließt. Im Vergleich zu der Standardentladung, bei der nur ein Kondensator bzw. eine Kondensatorenbank verwendet wird, erhöht sich die Schweißzeit von dem Standardwert $t_{hSt} = 5,9$ ms auf den verbesserten Wert $t_{hDS} = 11,0$ ms. Da der zweite Puls genau zum Zeitpunkt $t_{hSt}$ einsetzt, zu dem der Schweißprozess des ersten Pulses sich dem Ende zu neigt, erhöht der zweite Puls die Temperatur an der Fügestelle wieder und setzt so die Schweißung fort.

Am Ende des Schweißablaufs besitzt bei diesem Beispiel der erste Kondensator C1 bzw. die Kondensatorenbank C1 noch eine Restladung. Diese könnte durch neuerliches Zünden des ersten Thyristors Th1 an der Schweißstelle umgesetzt werden. Da aber keine Wirkung bezüglich des Schweißergebnisses zu erwarten ist, würde sich lediglich die Stromflusszeit unnötig verlängern. Bleibt die Restladung jedoch erhalten, verringert sich der Energieverbrauch der Anlage, wie unten noch gesondert gezeigt wird, und die Zeit für die Wiederaufladung verkürzt sich.

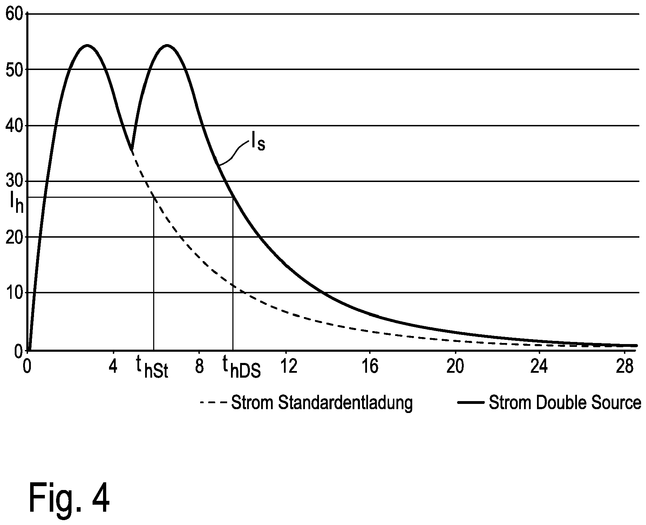

Wird die Kommutierung bereits vor dem Absinken des Summenstroms $I_S$ auf den Wert $I_h$ eingeleitet, ergibt sich ein Stromverlauf, wie ihn Figur 4 zeigt. Die Schweißzeit ist mit $t_{hDS} = 9,6$ ms jetzt zwar kürzer als im Beispiel gemäß Figur 3, aber dafür herrschen an der Fügestelle im Schweißgut deutlich höhere Temperaturen, was zu einem anderen Schweißergebnis führt. Somit kann über die Wahl des Kommutierungszeitpunktes, der von der Differenzspannung $U_1 - U_2$ der ersten und zweiten Kondensatorspannung U und $U_2$, abhängt, direkt das Schweißergebnis beeinflusst werden.

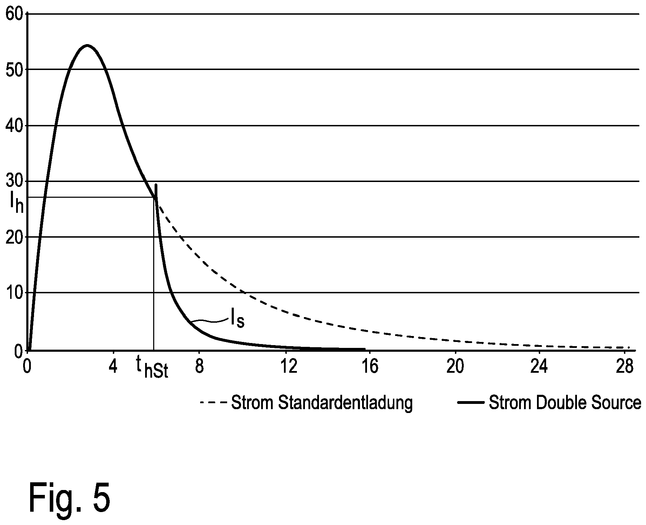

Das gemäß Figur 5 erläuterte Anwendungsbeispiel beruht darauf, dass der zweite Kondensator C2 über eine wesentlich geringere Kapazität verfügt als der erste Kondensator C1. Für einen Schweißablauf entsprechend des dort dargestellten Diagramms wird der zweite Kondensator C2 auf einen solchen Spannungswert U2 aufgeladen, der nur geringfügig größer ist, als die Spannung $U_1$ zum Zeitpunkt $t_{hSt}$. Die zweite Kondensatorspannung $U_2$ ist dabei so zu wählen, dass die negative Spannung $U_1 - U_2$ so lange bestehen bleibt, bis der erste Thyristor Th1 sicher den Sperrzustand erreicht hat.

Diese Anwendung dient in der dargestellten Weise dazu, den Stromfluss nach Unterschreiten des Wertes $I_h$, am Ende des eigentlichen Schweißprozesses, zu minimieren und somit den Energieverbrauch einzuschränken. Gewissermaßen arbeitet hier die zweite Stromquelle, die den zweiten Kondensator C2 und den zweiten Thyristor Th2 aufweist, als Löschkreis, der den ersten Thyristor Th1 "ausschaltet".

Die gegenüber einer Standardentladung gemäß Figur 1 eingesparte Energie ergibt sich aus der Restladung des ersten Kondensators C1, abzüglich der Lademenge des Kondensators C2. Im Diagramm der Figur 5 wird dieser Wert durch die Fläche zwischen den beiden Stromkurven veranschaulicht.

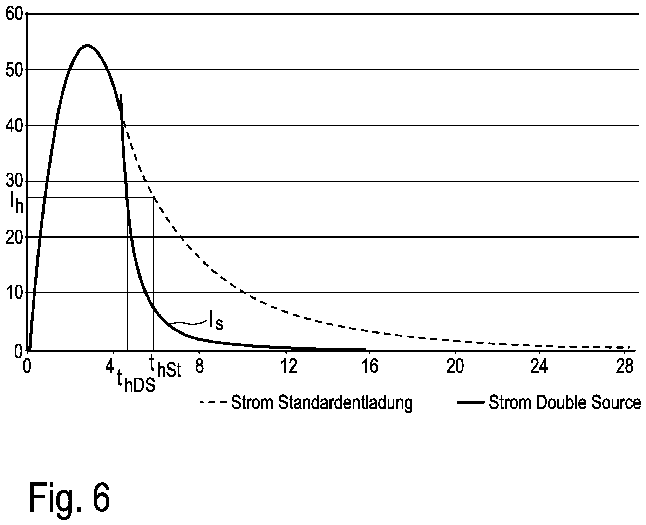

Wird der Zündzeitpunkt des zweiten Thyristors Th2 gegenüber $t_{hSt}$ vorverlegt, was in Figur 6 im Vergleich zur Figur 5 dargestellt ist, ergibt sich ein direkter Einfluss auf den Schweißvorgang. Auf diese Weise kann das Verfahren der Wegabschaltung für das Kondensatorentladeschweißen nutzbar gemacht werden. Die Wegabschaltung ist ein wesentliches Element, um Buckelschweißanwendungen zu steuern. Dabei wird das Schweißergebnis über den Weg definiert, den die bewegliche Elektrode während der Verformung des Buckels zurücklegt. Erreicht sie während der Stromflusszeit eine vorbestimmte Position, schaltet die Steuerung den Strom ab und beendet den Schweißvorgang. In dem Beispiel, das das Diagramm der Figur 6 darstellt, war das nach der Zeit $t_{hDS} = 4,3$ ms der Fall, und damit eher als zu der Zeit $t_{hSt} = 5,9$ ms gemäß Figur 5. Auch wenn bei dieser Wegabschaltung ein definiertes Beenden des Schweißvorgangs im Mittelpunkt steht, kommt es natürlich wiederum zur Einsparung von Energie, die ebenso wie oben zur Figur 5 erläutert, durch die Fläche zwischen den beiden Stromkurven veranschaulicht wird.

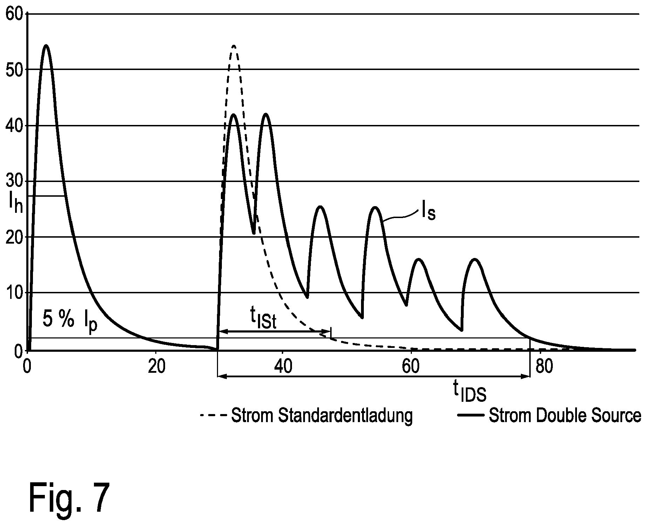

Als weiteres Anwendungsbeispiel wird noch das Nachwärmen zur Verringerung von Aufhärtungen betrachtet und erläutert, wie es im Diagramm der Figur 7 dargestellt ist. Zunächst werden die Fügepartner mit einem einzigen Strom-Puls, der über die erste Stromquelle und damit über den ersten Kondensator C1 und den zweiten Thyristor Th1 erzeugt werden kann, verschweißt. Danach wird der erste Kondensator C1 wieder aufgeladen, wobei diese Zeit in den Kurvenverläufen des Diagramms der Figur 7 nicht berücksichtigt ist. Bei der Standardentladung, die durch die gestrichelte Linie dargestellt ist, erhält der erste Kondensator C1 wieder die gleiche Spannung wie beim ersten Schweißpuls, also wie beim ersten Strompuls, um eine größtmögliche Wärmewirkung zu erzielen. Auf diese Weise ergibt sich eine Stromflussdauer von $t_{lSt}$ = 16,0 ms und ein Stromzeitintegral von 340 mAs.

Im vorgeschlagenen Verfahren gemäß einer Ausführungsform der Erfindung erhält der erste Kondensator C1 die gleiche Ladespannung, auf die der zweite Kondensator C2 bereits zu Beginn des Zyklus, also zu t=0, aufgeladen war. Diese kann geringer als die Ladespannung gehalten werden, die für den Schweißpuls benötigt wurde. Für das Nachwärmen werden der erste Kondensator C1 und der zweite Kondensator C2 abwechselnd und nach und nach in drei Stufen entladen und es fließt der Summenstrom $I_S$, wie im Diagramm dargestellt. Es ergibt sich eine Stromflusszeit von $T_{IDS}$ = 47,5 ms, die genau die dreifache Zeitdauer gegenüber der Standardentladung beträgt. Das Stromzeitintegral ist mit 825 mAs "nur" um den Faktor 2,4 größer, was auf die kleinere Ladespannung zurückzuführen ist. Das bedeutet, dass beim erfindungsgemäß vorgeschlagenen, auf dieses Beispiel angewendeten Verfahren mit einer kleineren Temperatur über eine längere Zeit erwärmt wurde, was dem Verfahren des Anlassens entgegen kommt.

Zum Kondensatorentladeschweißen (KE-Schweißen) ist zudem auf folgendes hinzuweisen. KE-Maschinen werden meistens im Teillastbetrieb eingesetzt. Entsprechend der Gleichung

$$E = ½ U²C$$

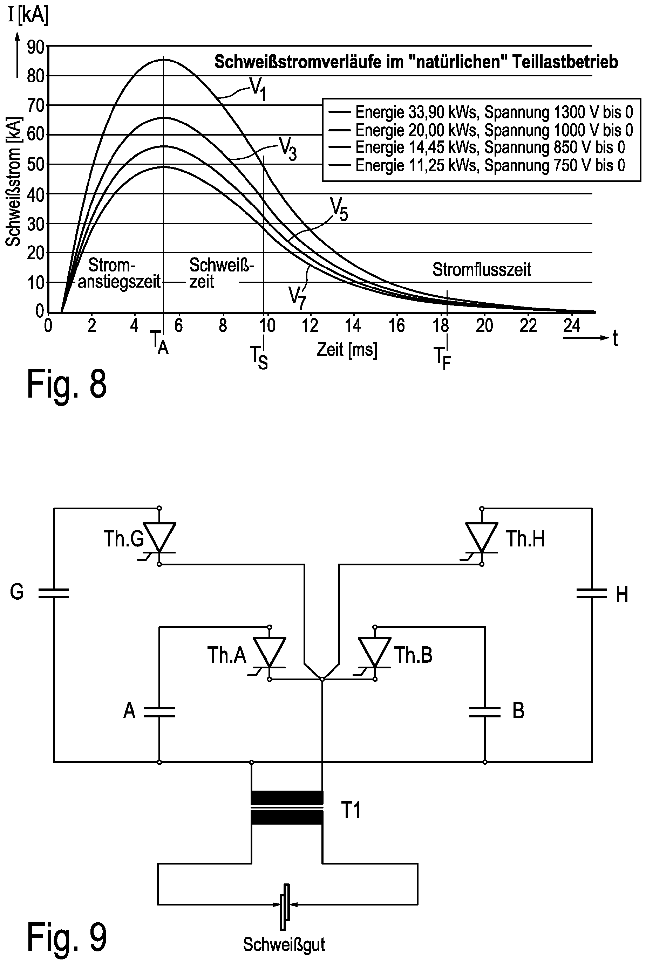

legt die Kapazität der eingebauten Kondensatoren und deren Nennwert der Ladespannung die maximale Energie fest, die zum Schweißen eingesetzt werden kann. Um mit geringerer Energie zu Schweißen wird die Ladespannung der Kondensatoren abgesenkt. Die Auswirkungen auf die Schweißstromverläufe veranschaulicht Figur 8. Dort sind Verläufe von Schweißströmen gezeigt, die sich in der Anfangsspannung $U_A$, bei der sie gestartet werden, und der Endspannung $U_E$, bei der sie unterbrochen werden bzw. auslaufen, unterscheiden. Folgende Verläufe $V_1$, $V_3$, $V_5$ und $V_7$ sind dargestellt, und dazu die Energieinhalte E angegeben:

$V_1$: $U_A$= 1300V, $U_E$=0V, E=33,8kWs
$V_3$: $U_A$= 1000V, $U_E$=0V, E=20kWs
$V_5$: $U_A$= 850V, $U_E$=0V, E=14,45kWs
$V_7$: $U_A$= 750V, $U_E$=0V, E=11,25kWs

Zur Orientierung sind auch eine Stromanstiegszeit $T_A$, eine Schweißzeit $T_S$ und eine Stromflusszeit $T_F$ angegeben.

Der Teillastbetrieb ist durch zwei wesentliche Nachteile gekennzeichnet:

a) Die Prozesszeiten Stromanstiegs-, Schweiß- und Stromflusszeit können nicht verändert werden, was die Variation des Schweißvorgangs wesentlich einschränkt.

b) Mit sinkender Ladespannung ergeben sich kleine Schweißströme; der Spitzenstrom sinkt ebenso wie alle anderen Stromwerte zu den einzelnen Zeitpunkten. Dadurch verringert sich nicht nur die der Schweißstelle zugeführte Energie, es ändert sich auch das gesamte Schweißverhalten. Besonders im unteren Teillastbereich sind Schweißungen oftmals nicht mehr ausführbar.

Um den Nachteilen des Teillastbetriebs zu begegnen, werden KE-Maschinen mit umschaltbaren Sondertransformatoren (bis zu drei verschiedene Übersetzungsverhältnisse und untergliederten Kondensatorenbänken (meist drei Gruppen) angeboten, die stufenweise verschiedene Leistungseinstellungen zulassen. Das Umschalten erfolgt in der Regel durch Umklemmen im Schaltschrank. Diese Arbeiten können nur von fachkundigem Personal ausgeführt werden. Dennoch muss als Schutz vor den hohen Spannungen die Maschine während dieser Arbeiten abgeschaltet werden. Vereinzelt kommen Nockenschalter zum Einsatz, die aber wegen der notwendigen hohen Stromtragfähigkeit sehr teuer sind. Auf diese herkömmliche Weise können mit dem hohen technischen Aufwand nur wenige (in der Praxis bis zu neun) verschiedene Leistungsstufen realisiert werden.

Andererseits ist eine Erhöhung der Schweißenergie stets mit einer Erhöhung des Spitzenstroms verbunden, was die Spritzergefahr erhöht und sogar zum "Verbrennen" der Schweißstelle führen kann (die erzeugte Wärmemenge ist proportional dem Quadrat des Stromes).

Um die Prozesszeiten zu verändern, wäre es denkbar, nicht nur mit einem Schweißpuls, sondern mit mehreren Pulsen den Schweißvorgang zu verlängern. Mehrpulsige Schweißungen sind aber aufgrund der Spezifik des KE-Schweißens bisher nicht möglich gewesen.

Um in einer Serienproduktion gleichbleibende Ergebnisse zu erzielen, müssen die zu fügenden Teile in ihren Abmessungen, Oberflächenbeschaffenheit und Materialzusammensetzung (Art, Anzahl und Anteil der Legierungselemente) in engen Toleranzen bereitgestellt werden. Veränderungen - hervorgerufen durch Chargen- oder gar Lieferantenwechsel, werden oftmals nicht erkannt und führen so zu einer Veränderung der Schweißqualität. Eine Widerstandsmessung in einem Vorpuls vor der Schweißung würde solche Veränderungen detektieren. Darüber hinaus kann ein solcher Vorpuls auch zur Konditionierung genutzt werden. Ein geringer Vorstrom beeinflusst die Fügestelle derart, dass vergleichbare Bedingungen für das Schweißen hergestellt werden. Dazu gehört Erzeugen einer konstanten Kontaktfläche, Beseitigen von Oberflächenverunreinigungen, um nur ein paar Beispiele zu nennen.

Solche Vorpulse sind mit der herkömmlichen Technik nicht möglich, weil ein entsprechend notwendiger Teillastbetrieb (unter 5 % der Nennleistung) nicht umgesetzt werden kann. Der Vorpuls muss mit einem so kleinen Strom ausgeführt werden, der die/den Buckel der Fügeteile stabil hält.

Daraus können folgende weitere Aufgaben abgeleitet werden:

1. Verbesserung des Teillastbetriebes, der eine kontinuierliche Veränderung der Arbeitspunkte sowie eine Veränderung der Prozesszeiten zulässt. Insbesondere sollten Umklemmarbeiten an der KE-Anlage vermieden werden.

2. Die Schweißenergie soll vergrößert werden können, ohne den Spitzenstrom zu erhöhen.

3. Ermöglichen von mehrpulsigen Fügeprozessen, bei denen die Schweißung über mehrere Pulse hinweg ununterbrochen fortgesetzt wird.

4. Arbeiten mit Vorpulsen, die über eine Widerstandsmessung die Schweißbedingungen überwachen bzw. dokumentieren und der zur Konditionierung der Fügestelle eingesetzt werden kann.

Gemäß weiterer Ausführungsformen lassen sich weitere Aufgaben realisieren. Selbst das Definieren der Aufgaben kann bereits als Fortschritt angesehen werden. Jedenfalls wird eine unterschiedliche Anzahl von Kondensatorenbänken vorgeschlagen, die auch über unterschiedliche Kapazitäten verfügen. Hierbei und ganz generell wird jeweils ein Kondensator einer Stromquelle durch eine Kondensatorbank realisiert. Generell wird zwischen Hauptkondensatoren A und/oder B sowie Löschkondensatoren G und/oder H unterschieden.

Eine beispielhafte Ausführungsform zeigt die Figur 9. Hauptkondensatoren A und B liefern die Schweißenergie und verfügen über eine entsprechend hohe Kapazität, die in den gezeigten Beispielen 20 mF beträgt. Bei einer maximalen Ladespannung von 1.300 V ergibt das eine Energie von E = 16,9 kWs. Auf diese konkreten Werte kommt es aber für das grundsätzliche Verständnis der gezeigten Ausführungsformen nicht an. Wichtig ist allerdings, dass die Hauptkondensatoren signifikant größer als die Löschkondensatoren sind.

Die Kapazität der Löschkondensatoren G und H muss somit nur so groß sein, um die Löschspannung für die jeweilige Hauptkapazität A bzw. B lange genug aufrecht zu erhalten, bis der Kommutierungsvorgang, der oben beschrieben ist, abgeschlossen ist. In den folgenden Beispielen besitzen die Löschkondensatoren G und H jeweils 0,82 mF mit 1.300 V Ladespannung.

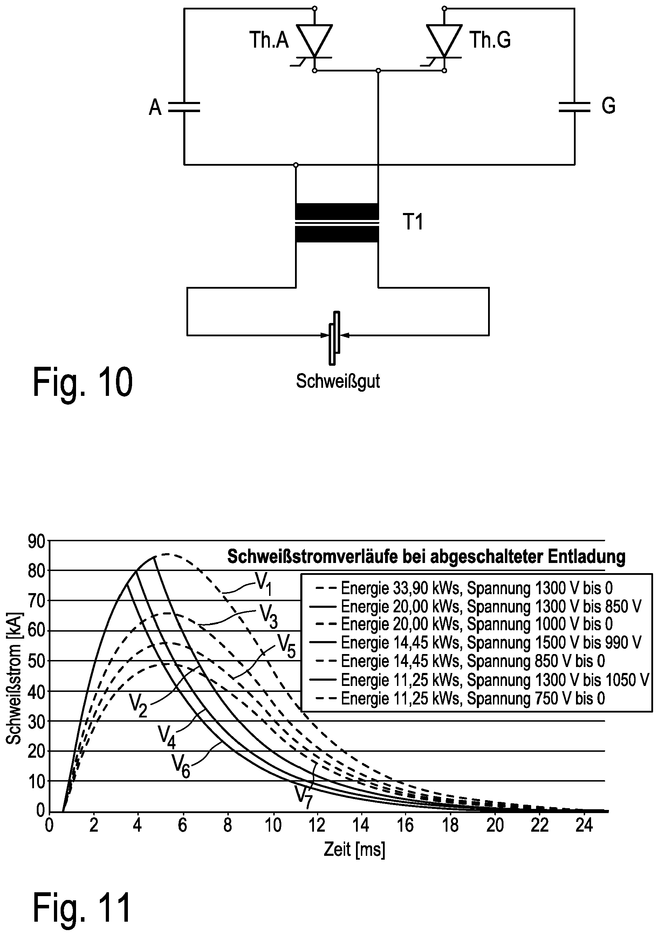

Eine Ausführungsform ist in Figur 10 veranschaulicht. Die Schaltung der Figur 10 entspricht der der Figur 2, wobei durch die Bezeichnung deutlich gemacht ist, dass zwei signifikant unterschiedliche Kondensator vorhanden sind, nämlich ein Hauptkondensator A und ein Löschkondensator G. Diese Schaltung kann als Mehrfachquellenschaltung bezeichnet werden und wird nachfolgend als Mehrfachquellenschaltung 1 bezeichnet, oder vereinfachend als MCS-1 abgekürzt. Sie dient dazu, die Entladung der Kondensatorenbank A zu einem gewünschten Zeitpunkt tx zu unterbrechen. Dadurch ergibt sich neben der Ladespannung von Kondensator A mit der Entladezeit tx eine zweite Einstellgröße, die den Teillastbetrieb wesentlich flexibler gestaltet.

Um einen Vergleich zum "natürlichen" Teillastbetrieb vornehmen zu können, wurden auf der Basis der maximalen Ladespannung von UA = 1.300 V dieselben Energien an den Schweißstromkreis abgegeben, wie es bei den Beispielen im Diagramm der Figur 8 über eine Spannungsabsenkung erreicht wurde.

Das Ergebnis wird in Figur 11 veranschaulicht und auch vergleichend mit den Beispielen der Figur 8 gegenübergestellt. In Figur 11 sind Verläufe von Schweißströmen gezeigt, die sich in der Anfangsspannung UA, bei der sie gestartet werden, und der Endspannung UE, bei der sie unterbrochen werden bzw. auslaufen, unterscheiden. Folgende Verläufe V1 bis V7 sind dargestellt, und dazu die Energieinhalte E angegeben:

$V_1$: $U_A$= 1300V, $U_E$=0V, E=33,8kWs

$V_2$: $U_A$= 1300V, $U_E$=850V, E=20kWs

$V_3$: $U_A$= 1000V, $U_E$=0V, E=20kWs

$V_4$: $U_A$= 1300V, $U_E$=980V, E=14,45kWs

$V_5$: $U_A$= 850V, $U_E$=0V, E=14,45kWs

$V_6$: $U_A$= 1300V, $U_E$=1050V, E=11,25kWs

$V_7$: $U_A$= 750V, $U_E$=0V, E=11,25kWs

Die Unterschiede werden auf den ersten Blick deutlich: Die über die abgeschaltete Entladung erzeugten Stromverläufe weisen deutlich höhere Spitzenströme und kürzere Prozesszeiten auf, womit sich eine neue Möglichkeit der Parameterwahl ergibt.

Der Entladevorgang von Kondensator A kann auch unterbrochen werden, wenn die Anfangsladespannung kleiner ist. Damit lassen sich beliebige Werte von Spitzenströmen und Schweißzeiten unterhalb der Maximalentladekurve stufenlos einstellen. Das Variieren der Parameter ist allein über das Verändern der Zündverzögerung von Th.G zu Th.A über die Steuerung möglich, ohne in der Kondensatorentladungsschweißvorrichtung, die vereinfachend auch als KE-Anlage bezeichnet wird, etwas umklemmen zu müssen.

Mit der Schaltungsvariante MCS-1 sind Schweißzeitverkürzungen möglich. Eine weitere Möglichkeit ist, einen Vorpuls zur Widerstandsmessung vor dem Schweißvorgang einzufügen, der auch als Konditionierungspuls dienen kann.

Um den Löschkondensator G vor Hauptkondensator A zu entladen muss der Thyristor Th.G zuerst gezündet werden.

In dieser Konstellation wird über die Ladespannung des Kondensators G die Stromhöhe eingestellt. Die Länge des Zündverzugs zwischen dem Zünden eines Thyristors für den Hauptkondensator und dem Zünden des Thyristors des Löschkondensators entscheidet, zusammen mit der Stromhöhe, über die der Schweißstelle zugeführten Energie. Diese darf nicht zu groß sein, um die Stabilität des Buckels unter dem Einwirken der Anpresskraft nicht zu gefährden. Allerdings kann über die Energiezufuhr und die Einwirkzeit des Vorpulses der Grad der Konditionierung der Schweißstelle variiert werden. Im Falle eines Vorpulses wird der Zündverzug negativ gezählt, da der Thyristor Th.G des Löschkondensators G vor dem Thyristor Th.A eingeschaltet wird. Die Widerstandsmessung kann zu einer beliebigen Zeit während des Vorpulses durchgeführt werden. Die Widerstandsmessung kann auch als Sicherheitsfunktion genutzt werden, um Spritzer bei überhöhten Widerstanden an der Schweißstelle zu vermeiden oder das Entladen des Hauptkondensators bei offenem Schweißstromkreis zu vermeiden.

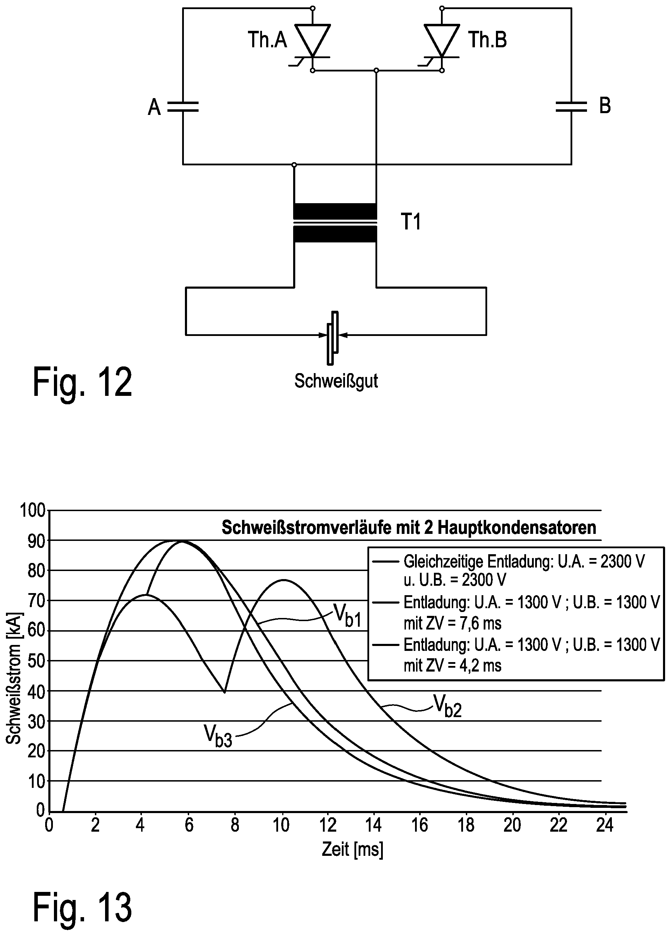

Eine weitere Ausführungsform ist in Figur 12 gezeigt. Diese Ausführungsform wird als Mehrfachquellenschaltung 2 bezeichnet, oder vereinfachend als MCS-2 abgekürzt. Im Unterschied zu MCS-1 ist die Schaltung jetzt mit zwei Hauptkondensatoren A und B ausgestattet. Um eine Vergleichbarkeit mit den oben gezeigten Beispielen zu gewährleisten, wurde die Gesamtkapazität auf die beiden Hauptkondensatoren A und B aufgeteilt: Die Kapazitäten CA und CB der ersten bzw. zweiten Hauptkapazität betragen jeweils 20mF: CA = CB = 20 mF.

Mit der gegenüber MCS-1 erhöhten Kapazität dient der zweite Kondensator nicht nur zum Löschen des ersten, er speist auch den Schweißstrom. Über die Zündverzögerung von des Thyristors Th.B gegenüber dem Thyristor Th.A wird der Stromverlauf beeinflusst.

Auch wenn die Gesamtkapazität aufgeteilt ist, kann sie wie ein einziger Kondensator entladen werden. Damit ergibt sich ein ähnlicher Stromverlauf wie in der vorangegangenen Variante MCS-1, mit einem um ca. 20 kA höheren Spitzenstrom.

Ein Ergebnis ist dazu in dem Diagramm der Figur 13 gezeigt. Dort sind folgende Verläufe Vb1 bis Vb3 dargestellt, bei denen die Anfangsspannung beider Kondensatoren immer 1300 V betrug:

Vb1: Gleichzeitige Entladung beider Kondensatoren.

Vb2: Zündverzug zwischen beiden Kondensatoren von 7,6ms

Vb3: Zündverzug zwischen beiden Kondensatoren von 4,2ms

Wie das Diagramm zeigt, kann in Abhängigkeit vom Zündverzug, der hier angibt, in welchem zeitlichen Abstand die Thyristoren der beiden Kondensatoren gezündet werden, der Stromverlauf variiert werden. In dieser Schaltungsvariante ist es auch möglich, die Schweißzeit zu verlängern, ohne dass der Spitzenstrom weiter erhöht werden muss. Beginnt die Entladung von Kondensator B erst deutlich nach dem ersten Strommaximum IPA, handelt es sich um eine Zweipulsschweißung, die mit einer herkömmlichen KE-Maschine nicht möglich ist. Damit zwischen den beiden Pulsen der Schweißprozess nicht unterbrochen wird, sollte der Schweißstrom in der Pause nicht unter den Wert des halben Spitzenstroms (0,5 IPA) abfallen.

Eine weitere grundsätzliche Ausführungsform ist eine Anwendung mit zwei Haupt- und zwei Löschkondensatoren, wie es in Figur 9 dargestellt ist. Diese Ausführungsform wird als Mehrfachquellenschaltung 3 bezeichnet oder vereinfachend als MCS-3 abgekürzt.

Eine große Flexibilität, um den Schweißstrom zu beeinflussen, gewinnt man hierbei dadurch, dass den beiden Hauptkondensatoren A und B zwei Löschkondensatoren G und H hinzugefügt sind.

Zunächst entsteht dadurch die Möglichkeit, die Funktionalitäten von MCS-2 mit einem Vor-/Konditionierungspuls zu ergänzen und entsprechend MCS-1 den zweiten Hauptpuls vorzeitig zu beenden.

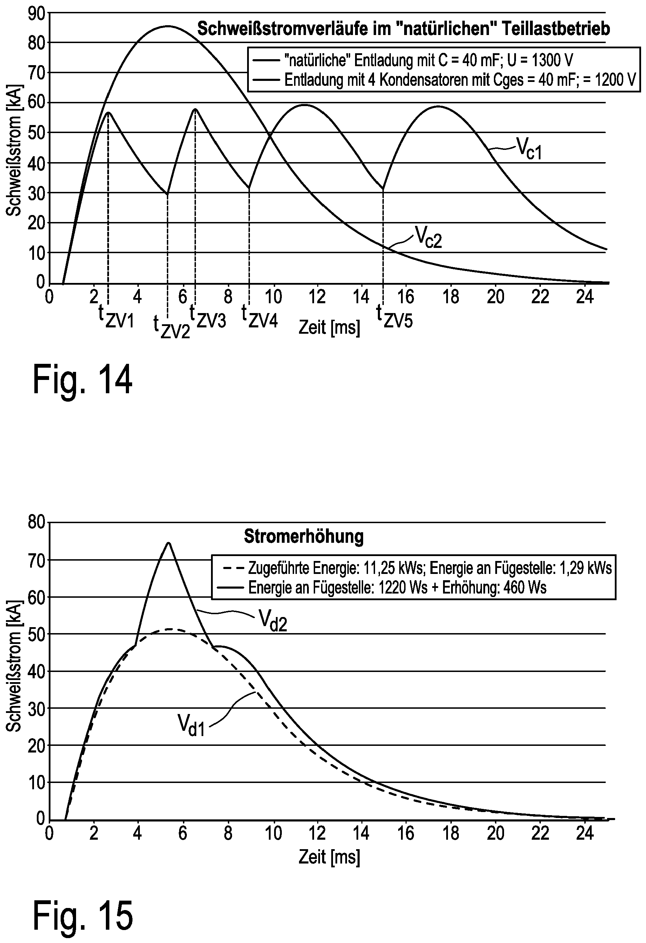

Die Hauptfunktion von MCS-3 besteht aber darin, den Spritzenstrom zu begrenzen und die Schweißzeit deutlich zu erhöhen. Im Diagramm der Figur 14 ist ein Stromverlauf als Vc1 dargestellt, bei dem der Spitzenstrom auf 60 kA begrenzt und die Schweißzeit auf ein Maximum (20,7 ms) ausgedehnt wurde. Ein Vergleich zu einer Entladung, bei der beide Hauptkondensatoren zugleich entladen werden, der als Verlauf Vc2 dargestellt ist, macht die großen Unterschiede deutlich.

Um einen Stromverlauf wie in dem Diagramm der Figur 14 gezeigt zu erreichen, wird folgender Ablauf beim Einsatz der Kondensatoren gewählt:

Zunächst wird der Thyristor Thy.A des Hauptkondensators A gezündet, wodurch die Anfangsentladung von A beginnt. Als Nächstes wird der Thyristor Thy.G des Löschkondensators G nach einer ersten Zündverzögerung tZV1 gezündet. Das unterbricht die Entladung des Hauptkondensators A. Der Löschkondensator G, der eine wesentlich geringere Kapazität als der Hauptkondensator A aufweist, wird völlig entladen. In der sich anschließenden Pause sinkt der Schweißstrom.

Ein Zünden des Thyristors Thy.B des zweiten Hauptkondensators B nach einer zweiten Zündverzögerung tZV2 leitet eine Anfangsentladung des zweiten Hauptkondensators B ein. Es wird dann der Thyristor Thy.H des zweiten Löschungskondensators H gezündet, nämlich nach der dritten Zündverzögerung tZV3. Das unterbricht die Entladung des zweiten Hauptkondensators B. Der zweite Löschkondensator H wird völlig entladen. In der sich anschließenden Pause sinkt der Schweißstrom.

Nach der vierten Zündverzögerung tZV4 zündet der Thyristor ThyA erneut und setzt die Entladung des Hauptkondensators A fort, dessen Spannung dabei auf null sinkt.

Nach einer fünften Zündverzögerung tZV5 zündet der Thyristor Thy.B des zweiten Hauptkondensators. Dadurch wird der Thyristor Thy.A gelöscht und der Hauptkondensator B entlädt sich weiter, bis dessen Spannung auch null wird. Der Strom klingt ebenfalls auf null ab.

Über die Ladespannungen der Hauptkondensatoren A und B sowie die insgesamt 5 Zündverzögerungszeiten ergibt sich eine große Flexibilität, um den Schweißstromverlauf einzustellen.

Durch die erfindungsgemäße Lösung, zumindest gemäß einer Ausführungsform werden auch viele Technologische Anwendungsbeispiele ermöglicht. Es eröffnen sich zudem ganz neue Anwendungsgebiete.

Zur Darstellung weiterer Anwendungsmöglichkeiten wird auf die Beispiele der Figur 8 Bezug genommen. Dabei ist besonders Folgendes wünschenswert:

Bei der Schweißung mit 33,8 kWs soll ein zu hoher Strom und daraus resultierende Auswirkungen verhindert werden.

Bei der Schweißung mit 11,25 kWs soll möglichst dezidiert der Schweißstrom sprunghaft und kontrolliert erhöht werden.

Die Stromkurven der Figur 8 beruhen auf der Entladung eines Kondensators mit der Kapazität C = 40 mF. In der vorgeschlagenen Anwendung einer vorgeschlagenen Mehrfachquellenschaltung, die verkürzt als MCS bezeichnet wird, wird die vormalige Hauptkapazität aufgeteilt: CC.A = CC.B = 20 mF. Dadurch soll beim Einsatz von MCS eine übermäßige Kostensteigerung vermieden werden. Möglich wird diese Aufteilung, da jederzeit C.A und C.B parallel entladen werden können und somit auch die 40 mF zur Verfügung stehen würden.

Figur 15 zeigt, dass eine plötzliche Stromerhöhung im Strommaximum möglich ist. Dort sind folgende Verläufe Vd1 und Vd2 dargestellt:

Vd1: Zugeführte Energie: 11,25 kWs; Energie an Fügestelle: 1,29kWs
Vd2: Energie an Fügestelle: 1.220 Ws + Erhöhung 460 Ws

Der Spitzenstrom kann im entscheidenden Moment von 52 kA auf 75 kA erhöht werden. Während die Grundenergie des Schweißpulses nahezu unverändert bleibt, besitzt der Anteil der Stromüberhöhung eine Energie von 460 Ws. Eine Stromerhöhung kann somit erreicht werden, wenn das für den gewünschten Schweißverlauf vorgesehen ist.

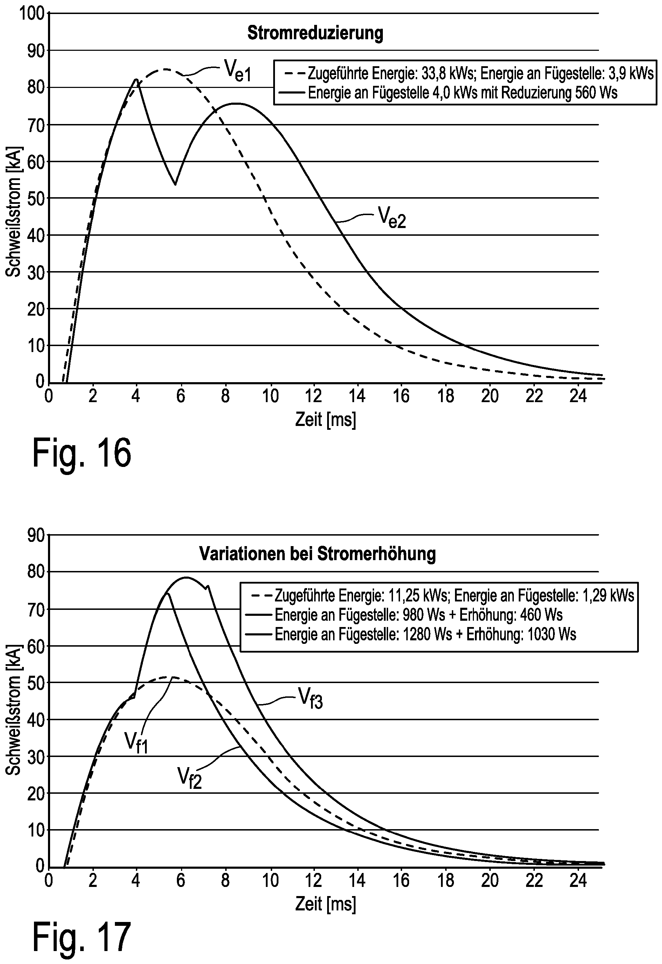

Aber auch der entgegengesetzte Fall, bei dem der Strom im Bereich des Maximums abgesenkt wird, ist realisierbar, wie die Figur 16 zeigt. Dort sind folgende Verläufe Ve1 und Ve2 dargestellt:

Ve1: Zugeführte Energie: 33,8 kWs; Energie an Fügestelle: 3,9kWs
Ve2: Energie an Fügestelle: 4,0 kWs mit vorübergehender Zurückhaltung von 560Ws im Bereich des Spitzenstroms.

Um die Gesamtenergie des Schweißvorgangs konstant zu halten, muss sich der Verlauf des Schweißstroms nach dem Einbruch gegenüber der "natürlichen" Kurve, die den Verlauf eines herkömmlichen KE-Schweißens gemäß Figur 8 bezeichnet, nach rechts verschieben. Die 560 Ws, die quasi im Bereich des Maximalstroms "zurückgehalten" werden, werden im zweiten Teil der Entladung wieder "zugeführt".

Über eine Variation der unterschiedlichen Zündzeitpunkte aller vier Kondensatoren, die bei MCS zum Einsatz kommen, können die Stromkurven gegenüber der gezeigten Beispiele noch weiter deutlich verändert und so an verschiedene Anwendungsfälle angepasst werden. Dies betrifft besonders die Ausführungsform gemäß Figur 9.

So kann es bei der Stromerhöhung notwendig sein, die Energie des Grundstrompulses gegenüber der Schweißung mit herkömmlicher Technik zu reduzieren, um die Stromerhöhung zumindest teilweise auszugleichen. Oder die Energie der Stromerhöhung muss sehr groß sein.

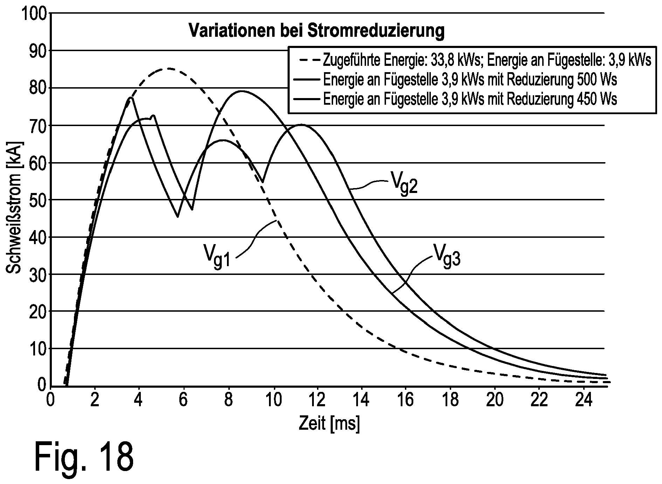

Bei der Stromreduzierung kann es notwendig sein, den Anfangsstromanstieg gegenüber dem "natürlichen" Stromverlauf verhaltener zu gestalten und dafür nach dem Einbruch ein höheres Strommaximum zu erhalten. Andererseits kann der Stromverlauf in der zweiten Phase auch "gestreckt" werden, um durch die Reduzierung des Spitzenstroms auch ein nachträgliches Zünden des Plasmas zu vermeiden. Solche verschiedenen weiteren Variationsmöglichkeiten sind in den Figuren 17 und 18 gezeigt.

In Figur 17 sind folgende Verläufe Vf1 bis Vf3 dargestellt:

Vf1: Zugeführte Energie: 11,25 kWs; Energie an Fügestelle: 1,29kWs

Vf2: Energie an Fügestelle: 980 Ws + Erhöhung 460Ws

Vf3: Energie an Fügestelle: 1.280 Ws + Erhöhung 1030Ws

In Figur 18 sind folgende Verläufe Vg1 bis Vg3 dargestellt:

Vg1: Zugeführte Energie: 33,8 kWs; Energie an Fügestelle: 3,9kWs

Vg2: Energie an Fügestelle: 3,9 kWs mit Reduzierung 500 Ws

Vg3: Energie an Fügestelle: 3,9 kWs mit Reduzierung 450 Ws

Figuren 19A und 19B zeigen einen Schaltplan einer Schweißvorrichtung gemäß einer Ausführungsform bei der der Schweißstrom $I_w$ durch vier Stromquellen erzeugt wird. Aus Gründen der Übersicht ist der Schaltplan auf zwei Figuren verteilt. Figur 19A zeigt hierbei die elektrische Ladeschaltung der Schweißvorrichtung 1901 und Figur 19B die elektrischen Entladeschaltung 1902 der Schweißvorrichtung, die zusammen eine Lade-Entlade-Schaltung der Schweißvorrichtung ausbilden.

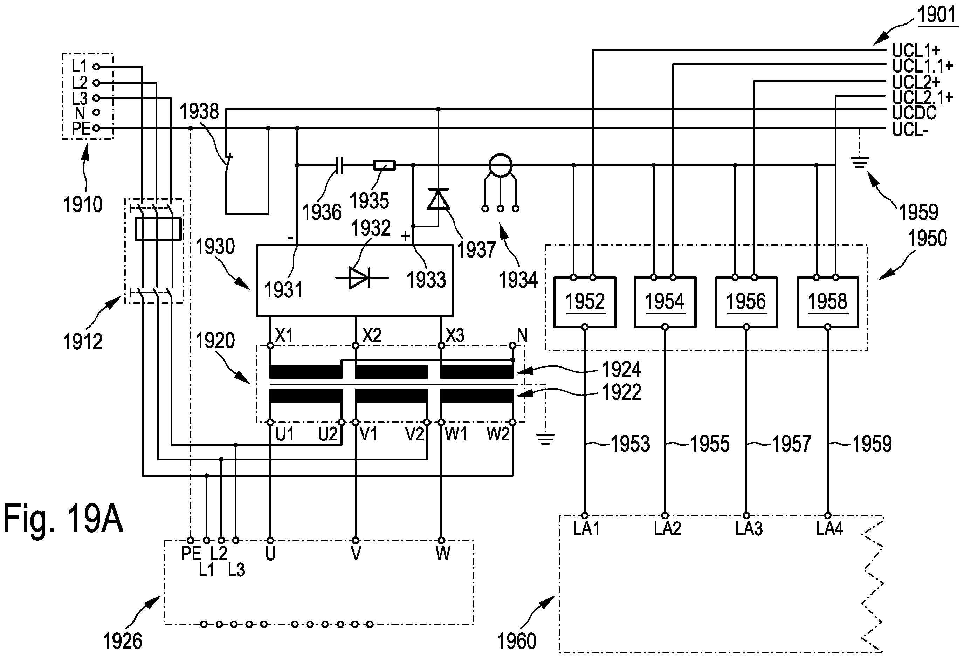

Figur 19A zeigt den ersten Teil der Schweißvorrichtung 1901, nämlich besonders die elektrische Ladeschaltung. Die Schweißvorrichtung weist zum Aufnehmen einer Netzspannung einen Versorgungsanschluss 1910 auf, die dazu eingerichtet ist, die Schweißvorrichtung dreiphasig mit elektrischem Strom zu versorgen. Zudem wird durch den Versorgungsanschluss 1910 auch ein Schutzleiter PE bereitgestellt, der den Bediener der Schweißvorrichtung vor elektrischem Schlag schützt.

Der Versorgungsanschluss 1910 ist über einen dreiphasigen Schutzschalter 1912 mittels der drei Phasen L1, L2 und L3 mit dem Ladetransformator 1920 der Schweißvorrichtung verschaltet, wobei der Ladetransformator 1920 dazu eingerichtet ist, die Netzspannung auf eine Ladetransformatorspannung zu transformieren. Hierzu weist der Ladetransformator eine Primärseite 1922 und eine Sekundärseite 1924 auf, wobei die Primärseite 1922 die sechs Klemmen U1, U2, V1, V2, W1, W2 umfasst.

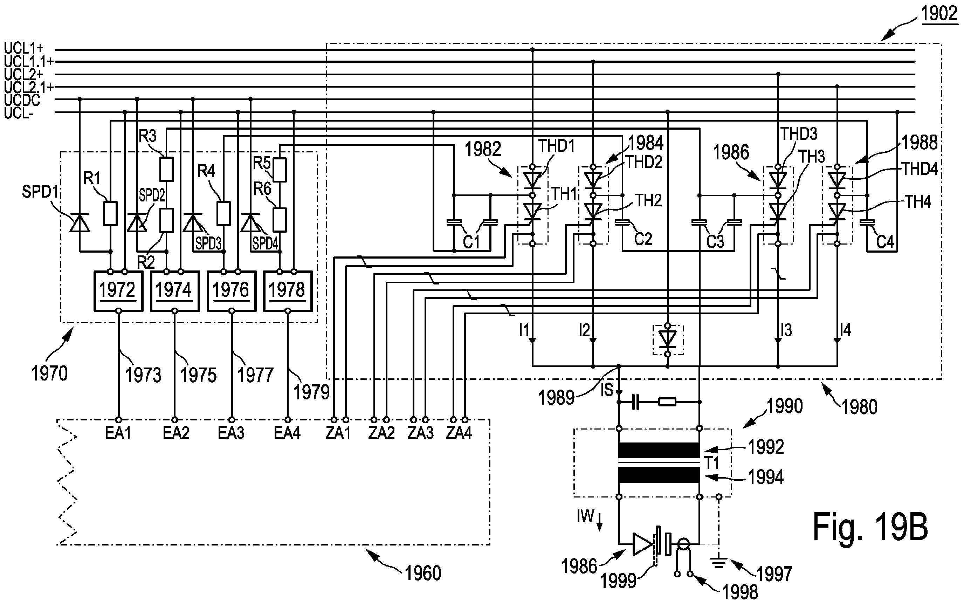

Der Ladetransformator 1920 wird mittels des Ladereglers 1926 so über die Klemmen U1, V1, W2 angesteuert, dass sich auf der Sekundärseite 1924 des Ladetransformators 1920 an den drei Klemmen X1, X2, X3 eine gewünschte Ladetransformatorspannung einstellt. Der Laderegler 1926 steuert somit die maximale Ladespannung und gibt einen maximalen Ladestrom für die Ladeeinrichtung 1950 bzw. für die in Figur 19B gezeigte Stromquelleneinheit 1980 vor.

Die durch den Ladetransformator 1920 transformierte Ladetransformatorspannung wird anschließend mittels einer dreiphasigen Gleichrichterschaltung 1930 in eine Gleichspannung gleichgerichtet. Die dreiphasige Gleichrichterschaltung 1930 ist hierzu als Diodengleichrichter ausgebildet, der einen Minus-Ausgang 1931 bzw. Minus-Pol und einen Plus-Ausgang 1933 bzw. Plus-Pol aufweist. Der Minus-Ausgang 1931 und der Plus-Ausgang 1933 bilden somit den Gleichspannungsausgang 1932, an dem eine Ladespannung an dem RC-Glied 1935, 1936 ausgegeben wird. Der Minus-Ausgang 1931 ist mit der Kondensator-Minusleitung $_{UCL-}$ verschaltet und der Plus-Ausgang 1933 ist über einen Stromsensor 1934, der den Gesamtladestrom erfasst, mit den vier Lade-IGBTs 1952, 1954, 1956, 1958 der Ladeeinrichtung 1950 verschaltet. Die vier Lade-IGBTs 1952, 1954, 1956, 1958 weisen somit eine gemeinsame Ladeschaltung, bestehend aus Versorgungsanschluss 1910, Ladetransformator 1920 und Gleichrichterschaltung 1930 auf, die den Gesamtladestrom bereitstellt. Die Schweißvorrichtung weist also unabhängig von der Anzahl der Stromquellen eine Versorgung auf, die alle Stromquellen der Schweißvorrichtung versorgt.

Am Gleichrichterausgang Gleichrichterschaltung 1930 ist ein RC-Glied angeschlossen, das auch als R-C-Kombination bezeichnet werden kann. Das RC-Glied besteht aus einem Ladewiderstand 1935 und einem Kondensator 1936. Der Kondensator 1936 dient als Zwischenspeicher, um die Ladung der Ladeeinrichtung 1950 zu beginnen bzw. den Beginn zu beeinflussen.

Ferner sind der Gleichrichterschaltung 1930 ein Sicherheitsschütz 1938 und eine Sperrdiode 1937 so nachgelagert, dass ein gemeinsamer Kurzschluss aller Pluspole der Kondensatoren der Stromquellen C1, C2, C3, C4 (Figur 19B) über eine Kondensator-Plusleitung $U_{CDC}$ und ein gemeinsamer Kurzschluss aller Minuspole der Kondensatoren der Stromquellen C1, C2, C3, C4 (Figur 19B) über die gemeinsame Kondensator-Minusleitung $_{UCL-}$ erfolgt. Die Schweißeinrichtung ist somit mittels des Sicherheitsschützes 1938 und der Sperrdiode 1937 dazu eingerichtet, eine Zwangsentladung, insbesondere aus Sicherheitsgründen, durchzuführen.

Die Ladeeinrichtung 1950, die aus den vier Lade-IGBTs 1952, 1954, 1956, 1958 gebildet ist, wird über eine Steuereinheit 1960 angesteuert. Die Steuereinheit 1960 ist dabei so ausgebildet, dass sie die vier Lade-IGBTs 1952, 1954, 1956, 1958 separat ansteuern kann. Hierzu sind die vier Lade-IGBTs jeweils über eine Steuerleitung 1953, 1955, 1957, 1959 mit den Eingängen LA1, LA2, LA3, LA4 der Steuereinheit 1960 verbunden. Die Steuerleitungen 1953, 1955, 1957, 1959 sind dabei dreiadrig ausgebildet. Zudem ist die Steuereinheit 1960 dazu eingerichtet, eine Vielzahl von Steuerbefehlen auszuführen, die beispielsweise durch den Bediener der Schweißvorrichtung mittels einer Software aufgespielt oder mittels eines Bedienelements der Schweißvorrichtung eingegeben werden. Über diese Steuerbefehle kann die Schweißvorrichtungen, einschließlich der Ladeeinrichtung 1950, der Entladeeinrichtung 1970 und Stromquelleneinheit 1980 angesteuert werden. Insbesondere können damit oder darauf basierend die IGBTs oder Thyristoren angesteuert werden. Die Steuereinheit 1960 setzt also u.a. die Anweisung des Bedieners so um, dass die Schweißvorrichtung beim Schweißen einen entsprechenden Strom erzeugt.

Die Lade-IGBTs 1952, 1954, 1956, 1958 sind über die Leitungen $U_{CL1+}$, $U_{CL1.1+}$, $U_{CL2+}$, $UCL_{2.1+}$ mit den entsprechenden Kondensatoren C1, C2, C3, C4 verschaltet und stellen jeweils eine entsprechende Ladespannung für die ihnen zugehörigen Kondensatoren C1, C2, C3, C4 bereit. Die Lade-IGBTs 1952, 1954, 1956, 1958 sind somit dazu eingerichtet, die Ladespannung des jeweiligen Kondensators anzuheben, den Kondensator also aufzuladen.

Figur 19B zeigt den zweiten Teil der Schweißvorrichtung 1902, nämlich die elektrische Entladeschaltung einschließlich der Stromquelleneinheit 1980.

Die Entladeeinrichtung 1970, die aus den vier Entlade-IGBTs 1972, 1974, 1976, 1978 gebildet ist, ist im Wesentlichen wie die in Figur 19A gezeigte Ladeeinrichtung 1950 aufgebaut und wird ebenfalls über die Steuereinheit 1960 angesteuert. Die Steuereinheit 1960 ist dabei zudem so ausgebildet, dass sie die vier Entlade-IGBTs 1972, 1974, 1976, 1978 separat ansteuern kann. Die Steuereinheit kann also jeden der IGBTs 1952, 1954, 1956, 1958, 1972, 1974, 1976, 1978 separat ansteuern. Die vier Entlade-IGBTs sind hierzu jeweils über eine Steuerleitung 1973, 1975, 1977, 1979 mit den Eingängen EA1, EA2, EA3, EA4 der Steuereinheit 1960 verbunden. Ferner sind die vier Entlade-IGBTs 1972, 1974, 1976, 1978 über die Kondensator-Minusleitung $_{UCL-}$ mit dem Minus-Ausgang 1931 der Gleichrichterschaltung verschaltet. Zudem sind die vier Entlade-IGBTs 1972, 1974, 1976, 1978 über die vier Sperrdioden SPD1, SPD2, SPD3, SPD4 so mit der Kondensator-Plusleitung $U_{CDC}$ verschaltet, dass die vier Entlade-IGBTs 1972, 1974, 1976, 1978 dazu eingerichtet sind, eine Zwangsentladung durchzuführen.

Zudem sind vier Entlade-IGBTs 1972, 1974, 1976, 1978 über die Entladewiderstände R1, R2, R3, R4, R5, R6 mit den entsprechenden Kondensatoren C1, C2, C3, C4 verschaltet und stellen jeweils eine entsprechende Entladelast für die Kondensatoren C1, C2, C3, C4 bereit. Die Entlade-IGBTs 1972, 1974, 1976, 1978 sind somit dazu eingerichtet, die Ladespannung der Kondensatoren abzusenken. Die Größe der Entladewiderstände R1, R2, R3, R4, R5, R6 ist dabei entsprechend ihrem zugehörigen Kondensator C1, C2, C3, C4 zu wählen. In der gezeigten Ausführungsform weisen die Kondensatoren C1, C2, C3, C4 unterschiedliche Größen auf, sodass auch die Entladewiderstände R1, R2, R3, R4, R5, R6 entsprechend unterschiedlich sind.

Die vorstehend beschriebene Lade-Entlade-Schaltung gemäß der Figur 19A und 19B ist somit dazu eingerichtet, die Kondensatoren C1, C2, C3, C4 der vier Stromquellen 1982, 1984, 1986, 1988 zu laden und zu entladen, bzw. die Ladespannungen der Kondensatoren C1, C2, C3, C4 separat so voneinander zu erhöhen und/oder abzusenken, dass ein fast beliebiger Schweißstrom $I_W$ durch die Schweißvorrichtung erzeugt wird.

Hierzu erzeugen die vier Stromquellen 1982, 1984, 1986, 1988 jeweils einen separaten Strom I1, I2, I3, I4, die am Überlagerungsknoten zu einem Summenstrom $I_S$ zusammengeführt werden und von dort weiter zur Primärseite 1992 des Transformators 1990 gelangen. Die Schweißvorrichtung weist somit vier separate Stränge auf, jeweils zum Erzeugen eines Teilstromes, wobei die vier Stränge eine gemeinsame Stromversorgung aufweisen und mittels des Überlagerungspunktes so zu einem gemeinsamen Strang verbunden werden, dass die Schweißvorrichtung einen Schweißstrom erzeugt.

Der Transformator 1990 transformiert den Summenstrom $I_S$ auf den Schweißstrom $I_W$, der dann mittels der Schweißkopfeinrichtung 1996 dazu verwendet wird, das Schweißgut 1999 zu schweißen. Um die Sicherheit beim Schweißen zu erhöhen, weist die Schweißvorrichtung zudem einen Stromsensor 1998 zum Erfassen des Schweißstromes und eine Erdung 1997 zum Erden von Fehlerströmen auf.

Die jeweiligen Ströme I1, I2, I3, I4 werden dabei jeweils durch eine Ladung der Kondensatoren C1, C2, C3, C4 mittels der Thyristoren Th1, Th2, Th3, Th4 erzeugt, wobei den Thyristoren Th1, Th2, Th3, Th4 jeweils eine Sperrdiode ThD1, ThD2, ThD3, ThD4 vorgeschaltet ist, um einen Ausgleich der unterschiedlichen Kondensatorspannungen zu verhindern. Zum Zünden der Thyristoren Th1, Th2, Th3, Th4 wird ebenfalls die Steuereinheit 1960 verwendet, die über die Eingänge ZA1, ZA2, ZA3, ZA4 mit den Thyristoren Th1, Th2, Th3, Th4 verbunden ist.

Besonders vorteilhaft ist hier, dass die Kondensatoren unabhängig voneinander auf unterschiedliche Spannungen ge- oder entladen werden können.

Die Funktionsweise der in Figuren 19A und 19B gezeigten erfindungsgemäßen Schweißvorrichtung wird nachfolgend näher an einem Beispiel erläutert:

Ist die Schweißvorrichtung eingeschaltet, erhält der Laderegler 1926 Vorgabewerte für die maximale Ladespannung und den maximalen Ladestrom. Die Maximalspannung ist so einzustellen, dass sie etwas höher als die höchste Ladespannung der vier Kondensatoren C1, C2, C3, C4 eingestellt ist, beispielsweise 50 V höher. Die Begrenzung des Maximalstroms muss dabei gewährleisten, dass die Sicherung der Maschine nicht auslöst. Das ist besonders bei KE-Maschinen (Kondensator-Entladungsschweißen) wichtig, da bei diesen eine niedrige Installationsleistung vorgegeben wird.

Es wird nun davon ausgegangen, dass folgende Restspannungen vorhanden sind: 900V am Kondensator C1; 200 V am Kondensator C2; 10 V am Kondensator C3 und 50V am Kondensator C4, wobei die Kondensatoren auf die folgenden Werte aufgeladen werden sollen: C1 auf 1.200 V; C2 auf 800 V; C3 auf 1.300 V und C4 auf 1.300 V.

Hierzu wird zuerst die Gleichrichterschaltung 1930 ausgeschaltet und danach werden sofort alle Lade-IGBT 1952, 1954, 1956, 1958 eingeschaltet. Ein Ausgleich der Ladespannungen der Kondensatoren ist dabei aufgrund der Verschaltung, insbesondere der Sperrdioden, nicht möglich. Innerhalb kürzester Zeit wird dann der Zwischenspeicher 1936 über den Entladewiderstand 1935 entladen und fällt auf den niedrigsten Spannungswert der Kondensatoren, in diesem Beispiel wären es 10V. Der Energieinhalt von Zwischenspeichers 1936 ist äußerst gering, sodass C1 bis C4 nicht geladen werden. Der Zwischenspeicher ist also kleiner als die Kondensatoren C1, C2, C3, C4.

Nun wird die Gleichrichterschaltung 1930 eingeschaltet. Da es eine Strombegrenzung gibt, beginnt die Gleichrichterschaltung mit einer sehr geringen Spannung, die nur so groß ist, dass C3, der die niedrigste Spannung aufweist, geladen wird. Im Folgenden steigt die Spannung und die anderen Kondensatoren C1, C2, C4 werden in den Ladevorgang einbezogen, nachdem ihre Restladung überschritten wird: C3 bei 50 V, C2 bei 200 V und C1 bei 900 V, entsprechend des oben genannten Beispiels. Erreicht ein Kondensator seine Zielspannung, schaltet der entsprechende IGBT ab, während die anderen Kondensatoren weiter geladen werden. In dem Beispiel würde C2 (Zielspannung 800 V) sogar eher abgeschaltet werden, bevor C1 (Restspannung 900 V) überhaupt mit der Ladung beginnt. Nachdem die Kondensatoren C1, C2, C3, C4 entsprechend dem Sollwert aufgeladen sind, sind alle Lade-IGBT 1952, 1954, 1956, 1958 wieder gesperrt, der Zwischenspeicher 1936 ist ebenfalls wieder geladen und Gleichrichterschaltung 1930 befindet sich im Leerlauf. Während des Ladevorgangs sorgt der Zwischenspeicher 1936 für eine Glättung der Ladespannung, was die Messung/ Überwachung erleichtert.

In dem Fall, dass beispielsweise die Zielspannung von C1 mit 500 V niedriger liegen würde als seine Restspannung von 900 V, um ein weiteres Beispiel zu Veranschaulichung zu nennen, würde der zugehörige Lade-IGBT 1952 gesperrt bleiben und stattdessen der zugehörige Entlade-IGBT 1978 angesteuert werden. Dann wird C1 entladen und die anderen drei Kondensatoren C2, C3, C4 werden gleichzeitig geladen.

Besonders vorteilhaft hierbei ist, dass das Entladen im Wesentlichen dem Laden entspricht und somit in etwaigen Schweißprogrammen auch als Laden behandelt wird. Der Bediener der Schweißvorrichtung muss also nur die Zielspannung der Kondensator C1, C2, C3, C4 vorgeben und die Steuerung 1960 entscheidet dann anhand der Restspannungen, ob ge- oder entladen werden muss.

Zudem ist die Lade-Entlade-Schaltung dazu eingerichtet, dass wenn während des Betriebes der Maschine, also der Schweißvorrichtung, Pausen auftreten und die Ladespannung der Kondensatoren absinkt, insbesondere unterhalb einer Toleranzgrenze, dass dann die Steuerung 1960 die zugehörige Lade-IGBTs einschaltet und die entsprechenden Kondensatoren nachgeladen werden.

**Patentansprüche**

**1.** Schweißvorrichtung zum Durchführen eines Kondensatorentladungsschweißverfahrens, wobei das Kondensatorentladungsschweißverfahren ein Widerstandsschweißverfahren ist, bei dem ein Schweißstrom ($I_w$) durch Entladung wenigstens eines Kondensators erzeugt wird, und die Schweißvorrichtung weist wenigstens eine erste Stromquelle (10) zum Erzeugen eines ersten Kondensatorstromes ($I_1$) zum Erzeugen des Schweißstromes ($I_w$) auf und ein Transformator (T1) mit Primärseite (31) und Sekundärseite (32) vorgesehen ist und jede Stromquelle mit der Primärseite (31) des Transformators (T1) so verschaltet ist, dass der erzeugte Kondensatorstrom durch die Primärseite (31) fließt, so dass in der Sekundärseite (32) der Schweißstrom ($I_w$) erzeugt wird, und die erste Stromquelle (10) umfasst

- einen ersten Kondensator (C1) zum Bereitstellen elektrischer Energie und
- einen ersten Thyristor (Th1) zum Einschalten des ersten Kondensatorstroms ($I_1$) aus dem ersten Kondensator (C1),

wobei wenigstens eine zweite Stromquelle (20) vorgesehen ist zum Erzeugen eines zweiten Kondensatorstroms ($I_2$), um wechselseitig mit der ersten Stromquelle (10) den Schweißstrom ($I_w$), oder nach und nach mit der ersten und weiteren Stromquellen den Schweißstrom ($I_w$) zu erzeugen, wobei
die zweite Stromquelle (20)

- einen zweiten Kondensator (C2) zum Bereitstellen elektrischer Energie und
- einen zweiten Thyristor (Th2) zum Einschalten des zweiten Kondensatorstroms ($I_2$) aus dem zweiten Kondensator (C2) umfasst

und mit der ersten Stromquelle (10) so verschaltet ist, dass das Einschalten des zweiten Kondensatorstroms ($I_2$) ein Ausschalten des ersten Kondensatorstroms ($I_1$) bewirken kann und/oder das Einschalten des ersten Kondensators (C1) ein Ausschalten des zweiten Kondensators (C2) bewirken kann, und dadurch gekenzeichnet, dass

- der erste Kondensator (C1) mit dem ersten Thyristor (Th1) in Reihe geschaltet und an einen Überlagerungsknoten (30) angeschlossen ist, so dass der erste Kondensatorstrom ($I_1$) von dem ersten Kondensator (C1) durch den ersten Thyristor (Th1) zum Überlagerungsknoten (30) fließt und
- der zweite Kondensator (C2) mit dem zweiten Thyristor (Th2) in Reihe geschaltet und an den Überlagerungsknoten (30) angeschlossen ist, so dass der zweite Kondensatorstrom ($I_2$) von dem zweiten Kondensator (C2) durch den zweiten Thyristor (Th2) zum ersten Überlagerungsknoten (30) fließt, wobei
- durch das Zünden des ersten Thyristors (Th1) das elektrische Spannungspotential am Überlagerungsknoten (30) so angehoben wird, dass der zweite Thyristor (Th2) dadurch erlischt, wenn er zuvor gezündet war, und/oder
- durch das Zünden des zweiten Thyristors (Th2) das elektrische Spannungspotential am Überlagerungsknoten (30) so angehoben wird, dass der erste Thyristor (Th1) dadurch erlischt, wenn er zuvor gezündet war.

2.  Schweißvorrichtung nach Anspruch 1, **dadurch gekennzeichnet, dass**

- das Einschalten des ersten Kondensatorstroms ($I_1$) durch Zünden des ersten Thyristors (Th1) erfolgt und dadurch der zweite Thyristor (Th2) gelöscht werden kann, um dadurch den zweiten Kondensatorstrom ($I_2$) auszuschalten und/oder dass
- das Einschalten des zweiten Kondensatorstroms ($I_2$) durch Zünden des zweiten Thyristors (Th2) erfolgt und dadurch der erste Thyristor (Th1) gelöscht werden kann, um dadurch den ersten Kondensatorstrom ($I_1$) auszuschalten.

3.  Schweißvorrichtung nach Anspruch 1 oder 2, **dadurch gekennzeichnet, dass**, die Primärseite (31) des Transformators (T1) mit einem Anschluss mit dem Überlagerungsknoten (30) verbunden ist.

4.  Schweißvorrichtung nach einem der vorstehenden Ansprüche, **dadurch gekennzeichnet, dass** wenigstens eine dritte Stromquelle vorgesehen ist, um nach und nach mit der ersten und zweiten Stromquelle (10, 20) und ggf. weiteren Stromquellen den Schweißstrom ($I_w$) oder einen Teil davon zu erzeugen und/oder dass die erste und zweite Stromquelle (10, 20) und ggf. weitere Stromquellen zueinander unterschiedlich dimensioniert sind.

5.  Schweißvorrichtung nach einem der vorstehenden Ansprüche, **dadurch gekennzeichnet, dass** der erste Kondensator eine wenigstens doppelt so große Kapazität aufweist wie der zweite Kondensator, insbesondere wenigstens eine fünfmal, vorzugsweise wenigstens eine zehnmal so große Kapazität wie der zweite Kondensator.

6.  Schweißvorrichtung nach einem der vorstehenden Ansprüche, **dadurch gekennzeichnet, dass** wenigstens eine dritte, vierte oder noch weitere Stromquellen vorgesehen sind und jede Stromquelle strukturell wie die erste Stromquelle aufgebaut ist und an einen bzw. den gemeinsamen Überlagerungsknoten angeschlossen ist.

7.  Schweißvorrichtung nach einem der vorstehenden Ansprüche, **dadurch gekennzeichnet, dass** jeweils zwei Stromquellen zusammen eine Doppelstromquelle bilden und die beiden Stromquellen einer Doppelstromquelle unterschiedlich große Kondensatoren aufweisen, wobei vorzugsweise zwei Doppelstromquellen vorgesehen sind.

8.  Schweißvorrichtung nach einem der vorstehenden Ansprüche, **dadurch gekennzeichnet, dass** die Schweißvorrichtung eine Lade-Entlade-Schaltung zum Steuern der Stromquellen aufweist, und die Lade-Entlade-Schaltung dazu vorbereitet ist, die Kondensatoren jeder Stromquelle unabhängig voneinander auf unterschiedliche Spannungen aufzuladen und/oder auf unterschiedliche Spannungen zu entladen.

9. Schweißvorrichtung nach Anspruch 8, **dadurch gekennzeichnet, dass** die Lade-Entlade-Schaltung folgendes umfasst:

   - für jede Stromquelle wenigstens ein Ladeelement zum Laden des Kondensators der Stromquelle,
   - für jede Stromquelle wenigstens ein Entladeelement zum Entladen des Kondensators der Stromquelle, und
   - eine Steuereinheit zum Steuern der Lade- und Entladeelemente,

   wobei die Steuereinheit dazu eingerichtet ist,

   - die Lade- und Entladeelemente separat so anzusteuern, dass der Ladezustand der Kondensatoren der Stromquellen zu einander unabhängig eingestellt wird, und
   - die Thyristoren der Stromquellen individuell, insbesondere sequentiell zu zünden.

10. Schweißvorrichtung nach Anspruch 8 oder 9, **dadurch gekennzeichnet, dass** die Schweißvorrichtung:

    - mehrere, insbesondere vier Stromquellen, und
    - eine gemeinsame Gleichrichterschaltung mit einem Gleichspannungsausgang aufweist zum Bereitstellen einer gemeinsamen Ladespannung, wobei
    - an dem Gleichspannungsausgang ein RC-Glied angeschlossen ist, um die gemeinsame Ladespannung zu beeinflussen, und
    - der Gleichspannungsausgang mit den Ladeelementen verbunden ist, um die gemeinsame Ladespannung an den Ladeelementen bereitzustellen, wobei
    - jedes Ladeelement dazu eingerichtet ist, aus der gemeinsamen Ladespannung den Kondensator der jeweiligen Stromquelle individuell zu laden.

11. Schweißvorrichtung nach einem der Ansprüche 8 bis 10, **dadurch gekennzeichnet, dass**

    - eine bzw. die Gleichrichterschaltung als passive Gleichrichterschaltung ausgebildet ist,
    - die Gleichrichterschaltung an ihrem Gleichspannungsausgang eine bzw. die gemeinsame Ladespannung bereitstellt,
    - an einem Wechselspannungseingang der Gleichrichterschaltung ein Ladetransformator angeschlossen ist, um die Gleichrichterschaltung mit einer Wechselschaltung zu versorgen und
    - ein Laderegler zum Steuern des Ladetransformators vorgesehen ist, und dazu eingerichtet ist, durch das Steuern des Ladetransformators die gemeinsame Ladespannung zu steuern.

12. Verfahren zum Durchführen eines Kondensatorentladeschweißverfahrens, **dadurch gekennzeichnet, dass** eine Schweißvorrichtung nach einem der vorstehenden Ansprüche verwendet wird.

13. Verfahren nach Anspruch 12, **dadurch gekennzeichnet, dass** die wenigstens eine erste Stromquelle (10) einen ersten Schweißstrompuls erzeugt und der Schweißstrom ($I_w$) und/oder die jeweiligen Kondensatorströme überwacht werden und davon abhängig die zweite Stromquelle (20) einen zweiten Schweißstrompuls erzeugt, besonders bevor der erste Schweißstrompuls abgeklungen ist.

14. Verfahren nach Anspruch 12 oder 13, **dadurch gekennzeichnet, dass** sukzessive mehre Schweißstrompulse abwechselnd durch die erste und zweite Stromquelle (10, 20) oder nach und nach durch die erste, zweite und wenigstens weitere dritte Stromquelle erzeugt werden.

15. Verfahren nach einem der Ansprüche 12 bis 14, **dadurch gekennzeichnet, dass** jeweils das Einschalten eines Kondensatorstroms, insbesondere das Zünden des betreffenden Thyristors, in Abhängigkeit von an dem ersten, zweiten und ggf. weiteren Kondensator anliegenden Kondensatorspannungen und/oder in Abhängigkeit einer Differenzspannung der an dem ersten und zweiten Kondensator (C1, C2) anliegenden ersten bzw. zweiten Kondensatorspannung erfolgt.

16. Verfahren nach einem der Ansprüche 12 bis 15, **dadurch gekennzeichnet, dass** das Zünden eines Thyristors zum Einschalten eines Kondensatorstroms jeweils nach einer vorbestimmten Zündverzögerung erfolgt, und dass insbesondere für jedes Zünden eine individuelle Zündverzögerung vorgegeben wird.

17. Verfahren nach einem der Ansprüche 12 bis 16, **dadurch gekennzeichnet, dass**

- mehrere Thyristoren jeweils zum Einschalten eines Kondensatorstroms vorgesehen sind und
- die Kondensatorströme sich zu einem Schweißstrom zusammensetzen und
- für jeden Thyristor eine oder mehrere individuelle Zündverzögerungen vorbestimmt sind, so dass
- der Schweißstrom für einen mehrere Zündverzögerungen umfassenden Zeitraum innerhalb eines vorbestimmten Strombereichs liegt, der durch eine unter Stromgrenze und eine obere Stromgrenze gekennzeichnet ist.

**Claims**

1. Welding device for carrying out a capacitor discharge welding method, wherein the capacitor discharge welding method is a resistance welding method, in which a welding current ($I_w$) is generated by discharging at least one capacitor, and the welding device has at least one first current source (10) for generating a first capacitor current ($I_1$) for generating the welding current ($I_w$) and
a transformer (T1) with primary side (31) and secondary side (32) is provided and each current source is connected to the primary side (31) of the transformer (T1), so that the generated capacitor current flows through the primary side (31), so that in the secondary side (32) the welding current ($I_w$) is generated, and
the first current source (10) comprises

   - a first capacitor (C1) for providing electrical energy and
   - a first thyristor (Th1) for switching on the first capacitor current ($I_1$) from the first capacitor (C1),

   wherein at least one second current source (20) is provided for generating a second capacitor current ($I_2$), in order to generate alternately with the first current source (10) the welding current ($I_w$), or gradually generate the welding current ($I_w$) with the first and further current sources, wherein
   the second current source (20) comprises

   - a second capacitor (C2) for providing electrical energy and
   - a second thyristor (Th2) for switching on the second capacitor current ($I_2$) from the second capacitor (C2)

   and is connected to the first current source (10) so that the switching on of the second capacitor current ($I_2$) can bring about a switching off of the first capacitor current ($1_1$) and/or the switching on of the first capacitor (C1) can bring about a switching off of the second capacitor (C2), and **characterised in that**

   - the first capacitor (C1) is connected in series with the first thyristor (Th1) and is connected to a superposition node (30) so that the first capacitor current ($I_l$) flows from the first capacitor (C1) through the first thyristor (Th1) to the superposition node (30) and
   - the second capacitor (C2) is connected in series with the second thyristor (Th2) and is connected to the superposition node (30), so that the second capacitor current ($I_2$) flows from the second capacitor (C2) through the second thyristor (Th2) to the first superposition node (30),

   wherein

   - by the activating of the first thyristor (Th1) the electric voltage potential at the superposition node (30) is increased so that the second thyristor (Th2) is thereby deactivated if it was previously activated, and/or
   - by the activating of the second thyristor (Th2) the electric voltage potential at the superposition node (30) is increased so that the first thyristor (Th1) is thereby deactivated if it was previously activated.

2. Welding device according to claim 1, **characterised in that**

   - the switching on of the first capacitor current ($I_1$) is carried out by activating the first thyristor (Th1) and thereby the second thyristor (Th2) can be deactivated, in order thereby to switch off the second capacitor current ($I_2$) and/or
   **in that**
   - the switching on of the second capacitor current ($I_2$) is carried out by activating the second thyristor (Th2) and thereby the first thyristor (Th2) can be deactivated, in order thereby to switch off the first capacitor current ($I_1$).

3. Welding device according to claim 1 or 2, **characterised in that** the primary side (31) of the transformer (T1) is connected by a connection to the superposition node (30).

**4.** Welding device according to one of the preceding claims, **characterised in that** at least a third current source is provided, in order gradually to generate with the first and second current source (10, 20) and if necessary further current sources, the welding current ($1_w$) or part thereof and/or **in that** the first and second current source (10, 20) and if necessary further current sources are dimensioned differently to one another.

**5.** Welding device according to one of the preceding claims, **characterised in that** the first capacitor has at least twice the capacity of the second capacitor, in particular at least five times, preferably at least ten times the second capacitor.

**6.** Welding device according to the preceding claims, **characterised in that** at least a third, fourth or still further current sources are provided and each current source is constructed structurally as the first current source and is connected to a or the common superposition nodes.

**7.** Welding device according to one of the preceding claims, **characterised in that** in each case two current sources together form a double current source and the two current sources of a double current source have different size capacitors, preferably two double current sources being provided.

**8.** Welding device according to one of the preceding claims, **characterised in that** the welding device has a charge-discharge switch for controlling the current sources, and the charge-discharge switch is prepared to charge the capacitors of each current source independently of one another to different voltages and/or to discharge them to different voltages.

**9.** Welding device according to claim 8, **characterised in that** the charge-discharge switching comprises the following:

- for each current source at least one charging element for charging the capacitor of the current source,
- for each current source at least one discharging element for discharging the capacitor of the current source, and
- a control unit for controlling the charging and discharging elements,

wherein the control unit is configured

- to control the charging and discharging elements separately so that the charging state of the capacitors of the current sources are set independently of one another, and
- to activate the thyristors of the current sources individually, in particular sequentially.

**10.** Welding device according to claim 8 or 9, **characterised in that** the welding device has:

- a plurality of, in particular four, current sources, and
- a common rectifier circuit having a direct-current output for providing a common charging voltage, wherein
- at the direct-voltage output an RC member is connected in order to influence the common charging voltage, and
- the direct-voltage output is connected to the charging elements in order to provide the common charging voltage at the charging elements, wherein
- each charging element is configured to individually charge from the common charging voltage the capacitor of the respective current source.

**11.** Welding device according to one of claims 8 to 10, **characterised in that**

- a or the rectifier circuit is formed as passive rectifier circuit,
- the rectifier circuit provides at its direct-voltage output a or the common charging voltage,
- at an alternating voltage input of the rectifier circuit a charge transformer is connected in order to supply the rectifier circuit with a two-way circuit and
- a charge regulator for controlling the charge transformer is provided and is configured to control the common charging voltage by controlling the charge transformer.

**12.** Method for carrying out a capacitor discharge welding method, **characterised in that** a welding device according to one of the preceding claims is used.

**13.** Method according to claim 12, **characterised in that** the at least one first current source (10) produces a first welding current pulse and the welding current ($I_w$) and/or the respective capacitor currents are monitored and depending thereof the second current source (20) produces a second welding current pulse, particularly before the first welding current pulse has decayed.

14. Method according to claim 12 or 13, **characterised in that** successively more welding current pulses are produced alternately by the first and second current source (10, 20) or gradually by the first, second and at least further third current source.

15. Method according to one of claims 12 to 14, **characterised in that** in each case the switching on of a capacitor current, in particular the activating of the relevant thyristor, takes place in dependence on capacitor voltages applied at the first, second and where appropriate further capacitor and/or in dependence on a difference voltage of the first or second capacitor voltage applied at the first and second capacitor (C1, C2).

16. Method according to one of claims 12 to 15, **characterised in that** the activating of a thyristor for switching on a capacitor current takes place after a predetermined activation delay, and **in that** in particular for each activation an individual activation delay is preset.

17. Method according to claims 12 to 16, **characterised in that**

    - a plurality of thyristors are each provided for switching on a capacitor current and
    - the capacitor currents are combined to form a welding current,
    - for each thyristor one or more individual activation delays are predetermined so that
    - the welding current for a time period comprising a plurality of activation delays lies within a predetermined current region which is **characterised by** a lower current limit and an upper current limit.

## Revendications

1. Dispositif de soudage pour la réalisation d'un procédé de soudage par décharge de condensateur, dans lequel le procédé de soudage par décharge de condensateur est un procédé de soudage par résistance, dans lequel un courant de soudage ($I_w$) est généré par décharge d'au moins un condensateur, et le dispositif de soudage présente au moins une première source de courant (10) pour la génération d'un premier courant de condensateur ($I_1$) pour la génération du courant de soudage ($I_w$) et
un transformateur (T1) avec côté primaire (31) et côté secondaire (32) est prévu et chaque source de courant est interconnectée avec le côté primaire (31) du transformateur (T1) de sorte que le courant de condensateur généré circule par le côté primaire (31), de sorte que le courant de soudage ($I_w$) est généré dans le côté secondaire (32), et la première source de courant (10) comprend

    - un premier condensateur (C1) pour la mise à disposition d'énergie électrique et
    - un premier thyristor (Th1) pour la mise en marche du premier courant de condensateur ($I_1$) du premier condensateur (C1),

dans lequel au moins une deuxième source de courant (20) est prévue pour générer un deuxième courant de condensateur ($I_2$), pour générer le courant de soudage ($I_w$) alternativement avec la première source de courant (10) ou le courant de soudage ($I_w$) au fur et à mesure avec les première et autres sources de courant, dans lequel la deuxième source de courant (20) comprend

    - un deuxième condensateur (C2) pour la mise à disposition d'énergie électrique et
    - un deuxième thyristor (Th2) pour la mise en marche du deuxième courant de condensateur ($I_2$) du deuxième condensateur (C2)

et est interconnectée avec la première source de courant (10) de sorte que la mise en marche du deuxième courant de condensateur ($I_2$) peut entraîner un arrêt du premier courant de condensateur ($I_1$) et/ou la mise en marche du premier condensateur (C1) peut entraîner un arrêt du deuxième condensateur (C2), et **caractérisé en ce que**

    - le premier condensateur (C1) est branché en série avec le premier thyristor (Th1) et raccordé à un noeud de superposition (30) de sorte que le premier courant de condensateur ($I_1$) circule du premier condensateur (C1) à travers le premier thyristor (Th1) vers le noeud de superposition (30) et
    - le deuxième condensateur (C2) est branché en série avec le deuxième thyristor (Th2) et raccordé au noeud de superposition (30) de sorte que le deuxième courant de condensateur ($I_2$) circule du deuxième condensateur (C2) à travers le deuxième thyristor (Th2) vers le premier noeud de superposition (30),

dans lequel

- par l'allumage du premier thyristor (Th1), le potentiel de tension électrique au niveau du noeud de superposition (30) est augmenté de telle sorte que le deuxième thyristor (Th2) s'éteint ainsi lorsqu'il a été allumé auparavant, et/ou
- par l'allumage du deuxième thyristor (Th2), le potentiel de tension électrique au niveau du noeud de superposition (30) est augmenté de telle sorte que le premier thyristor (Th1) s'éteint ainsi lorsqu'il a été allumé auparavant.

2. Dispositif de soudage selon la revendication 1, **caractérisé en ce que**

- la mise en marche du premier courant de condensateur ($I_1$) a lieu par allumage du premier thyristor (Th1) et le deuxième thyristor (Th2) peut ainsi être éteint pour arrêter ainsi le deuxième courant de condensateur ($I_2$) et/ou que
- la mise en marche du deuxième courant de condensateur ($I_2$) a lieu par allumage du deuxième thyristor (Th2) et le premier thyristor (Th1) peut ainsi être éteint pour arrêter ainsi le premier courant de condensateur ($I_1$).

3. Dispositif de soudage selon la revendication 1 ou 2, **caractérisé en ce que** le côté primaire (31) du transformateur (T1) est relié avec un raccord au noeud de superposition (30).

4. Dispositif de soudage selon l'une quelconque des revendications précédentes, **caractérisé en ce qu'**au moins une troisième source de courant est prévue pour générer le courant de soudage ($I_w$) ou une partie de celui-ci au fur et à mesure avec la première et la deuxième source de courant (10, 20) et le cas échéant d'autres sources de courant et/ou que la première et la deuxième source de courant (10, 20) et le cas échéant d'autres sources de courant sont dimensionnées différemment l'une par rapport à l'autre.

5. Dispositif de soudage selon l'une quelconque des revendications précédentes, **caractérisé en ce que** le premier condensateur présente une capacité au moins deux fois aussi grande que le deuxième condensateur, en particulier au moins une capacité cinq fois, de préférence au moins dix fois aussi grande que le deuxième condensateur.

6. Dispositif de soudage selon l'une quelconque des revendications précédentes, **caractérisé en ce qu'**au moins une troisième, quatrième ou encore d'autres sources de courant sont prévues et chaque source de courant est construite de manière structurelle comme la première source de courant et est raccordée à un noeud de superposition ou au noeud de superposition commun.

7. Dispositif de soudage selon l'une quelconque des revendications précédentes, **caractérisé en ce que** respectivement deux sources de courant forment ensemble une double source de courant et les deux sources de courant d'une double source de courant présentent des condensateurs de taille différente, dans lequel de préférence deux doubles sources de courant sont prévues.

8. Dispositif de soudage selon l'une quelconque des revendications précédentes, **caractérisé en ce que** le dispositif de soudage présente un circuit de charge-décharge pour la commande des sources de courant et le circuit de charge-décharge est préparé pour charger les condensateurs de chaque source de courant indépendamment l'un de l'autre à différentes tensions et/ou les décharger à différentes tensions.

9. Dispositif de soudage selon la revendication 8, **caractérisé en ce que** le circuit de charge-décharge comprend ce qui suit :

- pour chaque source de courant, au moins un élément de charge pour la charge du condensateur de la source de courant,
- pour chaque source de courant, au moins un élément de décharge pour la décharge du condensateur de la source de courant, et
- une unité de commande pour la commande des éléments de charge et décharge,

dans lequel l'unité de commande est aménagée

- pour commander les éléments de charge et de décharge de manière séparée de sorte que l'état de charge des condensateurs des sources de courant est réglé indépendamment l'un de l'autre, et
- pour allumer les thyristors des sources de courant individuellement, en particulier séquentiellement.

**10.** Dispositif de soudage selon la revendication 8 ou 9, **caractérisé en ce que** le dispositif de soudage présente :

- plusieurs, en particulier quatre sources de courant, et
- un circuit redresseur commun avec une sortie de tension continue pour la mise à disposition d'une tension de charge commune, dans lequel
- un organe RC est raccordé à la sortie de tension continue pour influencer la tension de charge commune, et
- la sortie de tension continue est reliée aux éléments de charge pour mettre à disposition la tension de charge commune aux éléments de charge, dans lequel
- chaque élément de charge est aménagé pour charger individuellement le condensateur de la source de courant respective à partir de la tension de charge commune.

**11.** Dispositif de soudage selon l'une quelconque des revendications 8 à 10, **caractérisé en ce que**

- un ou le circuit redresseur est réalisé en tant que circuit redresseur passif,
- le circuit redresseur met à disposition à sa sortie de tension continue une tension de charge ou la tension de charge commune,
- un transformateur de charge est raccordé à une entrée de tension alternative du circuit redresseur pour alimenter le circuit redresseur avec un circuit en va-et-vient et
- un régulateur de charge est prévu pour la commande du transformateur de charge et est aménagé pour commander la tension de charge commune par la commande du transformateur de charge.

**12.** Procédé de réalisation d'un procédé de soudage par décharge de condensateur, **caractérisé en ce qu'**un dispositif de soudage selon l'une quelconque des revendications précédentes est utilisé.

**13.** Procédé selon la revendication 12, **caractérisé en ce que** l'au moins une première source de courant (10) génère une première impulsion de courant de soudage et le courant de soudage ($I_w$) et/ou les courants de condensateur respectifs sont surveillés et en fonction de cela la deuxième source de courant (20) génère une deuxième impulsion de courant de soudage, en particulier avant que la première impulsion de courant de soudage ait disparu.

**14.** Procédé selon la revendication 12 ou 13, **caractérisé en ce que** plusieurs impulsions de courant de soudage successives sont générées alternativement par la première et la deuxième source de courant (10, 20) ou au fur et à mesure par la première, deuxième et au moins autre troisième source de courant.

**15.** Procédé selon l'une quelconque des revendications 12 à 14, **caractérisé en ce que** respectivement la mise en marche d'un courant de condensateur, en particulier l'allumage du thyristor concerné, a lieu en fonction de tensions de condensateur appliquées sur le premier, deuxième et le cas échéant autre condensateur et/ou en fonction d'une tension différentielle de la première ou deuxième tension de condensateur appliquée sur le premier et le deuxième condensateur (C1, C2).

**16.** Procédé selon l'une quelconque des revendications 12 à 15, **caractérisé en ce que** l'allumage d'un thyristor pour la mise en marche d'un courant de condensateur a lieu respectivement après une temporisation d'allumage prédéterminée, et qu'en particulier, pour chaque allumage, une temporisation d'allumage individuelle est prédéfinie.

**17.** Procédé selon l'une quelconque des revendications 12 à 16, **caractérisé en ce que**

- plusieurs thyristors sont prévus respectivement pour la mise en marche d'un courant de condensateur et
- les courants de condensateur composent un courant de soudage et
- pour chaque thyristor, une ou plusieurs temporisations d'allumage individuelles sont prédéterminées, de sorte que
- le courant de soudage pour une période de temps englobant plusieurs temporisations d'allumage se trouve dans une plage de courant prédéfinie qui est **caractérisée par** une limite de courant inférieure et une limite de courant supérieure.

Fig. 1

Fig. 2

Fig. 3

Fig. 4

Fig. 5

Fig. 6

Fig. 7

Fig. 8

Fig. 9

## Fig. 10

Th.A    Th.G

A    G

T1

Schweißgut

## Fig. 11

Schweißstromverläufe bei abgeschalteter Entladung

- - Energie 33,90 kWs, Spannung 1300 V bis 0
—— Energie 20,00 kWs, Spannung 1300 V bis 850 V
- - Energie 20,00 kWs, Spannung 1000 V bis 0
—— Energie 14,45 kWs, Spannung 1500 V bis 990 V
- - Energie 14,45 kWs, Spannung 850 V bis 0
—— Energie 11,25 kWs, Spannung 1300 V bis 1050 V
- - Energie 11,25 kWs, Spannung 750 V bis 0

$V_1$
$V_3$
$V_5$
$V_2$
$V_4$
$V_6$
$V_7$

Schweißstrom [kA]

Zeit [ms]

Fig. 12

Schweißgut

Fig. 13

Fig. 14

Fig. 15

Fig. 16

Fig. 17

**Fig. 18**

Fig. 19A

EP 3 138 649 B1

Fig. 19B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2713045 A1
- US 5986907 A
- EP 1990123 A2
- EP 0225443 A1
- SU 448101 A1